# FASCICULE DE BREVET EUROPEEN

(11) **EP 4 126 528 B1**
(45) Date de publication et mention de la délivrance du brevet: **20.03.2024**
(21) Numéro de dépôt: 21721151.5
(22) Date de dépôt: 30.03.2021
(51) Int. Cl.: B32B 3/08, B32B 3/26, B32B 17/10, B60J 1/00, B60J 1/17

(54) **VITRAGE FEUILLETÉ POUR UN VÉHICULE AUTOMOBILE, NOTAMMENT UN VITRAGE LATÉRAL**
VERBUNDVERGLASUNG FÜR EIN KRAFTFAHRZEUG, INSBESONDERE SEITENVERGLASUNG
LAMINATED GLAZING FOR A MOTOR VEHICLE, IN PARTICULAR LATERAL GLAZING

(30) Priorité: 01.04.2020 FR 2003232
(43) Date de publication de la demande: 08.02.2023
(73) Titulaire: Saint-Gobain Glass France, 92400 Courbevoie (FR)
(72) Inventeur: RAPENNE, Thibault, 60400 NOYON (FR); LAMOUREUX, Laurent, 60170 RIBECOURT-DRESLINCOURT (FR)
(74) Mandataire: Saint-Gobain Recherche
(86) Numéro de dépôt international: PCT/FR2021/050553
(87) Numéro de publication internationale: WO 2021/198608

(56) Documents cités:
- WO-A1-2019/068448
- FR-A1- 2 732 730
- US-A1- 2019 322 161

## Description

### Domaine technique de l'invention

L'invention concerne un vitrage feuilleté pour un véhicule automobile, notamment un vitrage latéral.

L'invention concerne plus particulièrement un vitrage feuilleté pour un véhicule automobile, notamment un vitrage latéral destiné à être monté coulissant dans une portière du véhicule, comportant au moins une feuille de verre extérieure et une feuille de verre intérieure assemblées par un intercalaire qui comporte au moins une feuille en matériau polymère, ledit vitrage comportant au moins une partie de fixation du vitrage traversée par au moins un orifice de fixation qui est formé par au moins un trou présentant un premier axe qui est ménagé dans la feuille de verre extérieure, un trou ménagé dans l'intercalaire et un trou présentant un deuxième axe qui est ménagé dans la feuille de verre intérieure, dans lequel au moins un organe de liaison est fixé au vitrage en traversant ledit orifice de fixation, ledit organe de liaison muni d'un trou étant destiné à recevoir des moyens de fixation dudit vitrage avec un dispositif d'entraînement.

L'invention sera plus particulièrement décrite pour une utilisation dans le domaine automobile en tant que vitrage latéral destiné à être monté coulissant dans la carrosserie d'un véhicule automobile, en particulier dans une portière du véhicule, mais n'est toutefois pas limitée à une telle application.

### Arrière-plan technique

Les vitrages automobiles sont sujets à des performances toujours plus exigeantes et souvent difficilement conciliables, tel est notamment le cas des vitrages latéraux.

Dans un véhicule automobile, les vitrages latéraux sont généralement montés coulissant par l'intermédiaire d'un dispositif d'entraînement dans les portières du véhicule.

Un tel vitrage latéral comporte une zone visible et une zone non visible qui s'étendent de part et d'autre d'une limite de visibilité, ladite zone non visible située en dessous de la limite de visibilité comportant au moins une partie de fixation du vitrage qui est destinée à être reliée par des moyens de fixation à un dispositif d'entraînement.

Par ailleurs, dans certains véhicules et pour des raisons notamment esthétiques, les portières ne comportent pas de cadre autour du vitrage latéral, à l'instar de certains cabriolets, ce qui participe à accroître les exigences de performance du vitrage.

De telles portières sans cadre sont encore désignées dans le domaine automobile par le terme anglais « *frameless* ».

De manière connue, le dispositif d'entraînement du vitrage latéral est commandé sélectivement par l'intermédiaire d'un organe, tel qu'une manivelle ou un bouton électrique, pour déplacer le vitrage en hauteur par rapport à la portière, respectivement entre une position de fermée et au moins une position ouverte.

Les vitrages latéraux d'un véhicule sont habituellement constitués de feuilles de verre monolithiques plus ou moins épaisses. De tels vitrages monolithiques sont par exemple chauffés à une température de l'ordre de 650°C puis refroidis brutalement afin de les tremper, tout en leur donnant généralement une forme torique.

Les vitrages monolithiques (encore appelés « vitrages trempés ») présentent le double avantage d'être plus résistants aux sollicitations mécaniques et de se fragmenter en une multitude de petits morceaux en cas de casse. Une telle fragmentation du vitrage, communément appelée « fragmentation Securit », permet en outre de répondre aux spécifications très précises de la norme internationale R43.

Par comparaison avec un tel vitrage monolithique, un vitrage feuilleté comporte une feuille de verre extérieure et une feuille de verre intérieure qui sont assemblées par un intercalaire comportant au moins une feuille en matériau polymère, telle qu'au moins une feuille de polyvinylbutyral (PVB).

Les constructeurs automobiles souhaitent, notamment pour les véhicules les plus sophistiqués, disposer de vitrages latéraux offrant les meilleures propriétés existantes telles qu'en particulier des qualités d'atténuation acoustique, de résistance à l'effraction, des propriétés athermiques, etc.

C'est l'une des raisons pour lesquelles, on recherche de plus en plus à utiliser des vitrages feuilletés en tant que vitrages latéraux dans un véhicule automobile.

En effet, les vitrages feuilletés permettent d'améliorer le confort acoustique grâce aux propriétés d'absorption de l'intercalaire comportant au moins une feuille en matériau polymère, tel que du polyvinylbutyral (PVB).

Les vitrages feuilletés offrent également une meilleure résistance à l'effraction ainsi que de nouvelles propriétés comme le blocage des rayonnements UV provenant du soleil.

Toutefois, l'utilisation de tels vitrages feuilletés n'est pas sans poser certains problèmes, notamment de tenue mécanique lorsque l'on veut les fixer comme les vitrages monolithiques.

La fixation du vitrage est un point particulièrement important lorsque l'on recherche une interchangeabilité entre les deux types de vitrage d'une épaisseur donnée afin de pouvoir les substituer.

L'un des problèmes rencontrés est de pouvoir obtenir un vitrage feuilleté présentant des caractéristiques, en particulier de comportement mécanique, qui soient équivalentes à celles d'un vitrage monolithique.

En effet, les feuilles de verre constitutives du vitrage feuilleté n'atteignent pas les niveaux de contraintes des vitrages monolithiques, en raison notamment de leur moindre épaisseur qui ne permet pas de créer, lors du refroidissement, un gradient thermique suffisant qui soit à même de générer des contraintes nécessaires à l'obtention d'une fragmentation Securit.

C'est la raison pour laquelle, de tels vitrages feuilletés sont encore désignés par les termes « durcis » ou « semi-trempés » par opposition à la désignation de « trempés » couramment utilisée pour les vitrages monolithiques.

L'utilisation d'un vitrage feuilleté en tant que vitrage latéral ne pose pas de problème de sécurité en soit dès lors que la feuille en matériau polymère de l'intercalaire assure la cohésion de l'ensemble en cas d'accident et évite ainsi la projection de morceaux de verre susceptibles de provoquer des blessures.

En revanche, outre leurs caractéristiques de comportement mécanique, les vitrages feuilletés se distinguent généralement des vitrages monolithiques en ce qui concerne leur liaison au dispositif d'entrainement.

Pour assurer la liaison d'un vitrage latéral avec le dispositif d'entraînement logé dans la portière, on connaît de l'art antérieur différents types de liaison.

On connaît un premier type de liaison par collage dans lequel les moyens de fixation comportent par exemple au moins une pièce ou une paire de pièces de liaison qui sont fixées par collage au vitrage afin de lier en déplacement le vitrage au dispositif d'entraînement.

Selon un exemple de réalisation de moyens de fixation utilisés pour ce premier type de liaison, les moyens de fixation comportent au moins une pièce de liaison en « Y » (appelée « *holder* » en anglais) qui, d'une part, est fixée audit vitrage par collage et, d'autre part, est reliée au dispositif d'entraînement, généralement par vissage ou autre moyen équivalent.

La pièce de liaison en « Y » comporte par exemple deux flasques qui sont chacun fixés par collage sur l'une des faces du vitrage, respectivement faces interne et externe.

La pièce de liaison en « Y » est agencée au voisinage du bord inférieur situé en dessous de la limite de visibilité, soit dans la zone non visible dissimulée dans la portière, et cela afin de lier en déplacement le vitrage latéral au dispositif d'entraînement.

Ce premier type de liaison par collage nécessite toutefois la mise en oeuvre d'au moins une étape de collage spécifique, postérieurement à l'assemblage du vitrage feuilleté.

On connaît encore un deuxième type de liaison dans lequel les moyens de fixation sont liés au vitrage par pincement d'une partie du vitrage, uniquement par l'extérieur.

Les moyens de fixation pour une telle liaison du deuxième type sont par exemple similaires à ceux décrits précédemment en ce qu'ils comportent notamment au moins deux pièces qui sont agencées de part et d'autre d'une partie du vitrage située dans la zone non visible.

Les deux pièces assurant le pincement sont par exemple assemblées l'une avec l'autre en dessous du vitrage, généralement par un vissage. Ainsi, les pièces sont serrées ensemble à l'une de leur extrémité et de manière à venir, à leur autre extrémité, pincer les faces externe et interne du vitrage avec un effort de serrage propre à garantir la liaison en déplacement entre le vitrage et le dispositif d'entraînement.

Si par comparaison au premier ce deuxième type de liaison permet de supprimer l'étape de collage, les moyens de fixation associés présentent parfois un encombrement jugé important, notamment verticalement, ce qui contribue à en limiter l'utilisation.

On notera cependant que le premier type et le deuxième type de liaison ont en commun de ne pas nécessiter de ménager un ou des trous de fixation dans le vitrage comme cela est le cas avec des moyens de fixation du troisième type de liaison qui sera décrit ci-après.

C'est d'ailleurs (absence de trous) l'une des raisons pour lesquelles, ces premier et deuxième types de liaison sont très majoritairement utilisés pour les vitrages feuilletés.

En effet et par comparaison, le troisième type de liaison se caractérise en outre par le fait qu'un ou des trous de fixation sont ménagés dans le vitrage et sont destinés à recevoir une partie des moyens de fixation associés au vitrage.

Les moyens de fixation pour ce troisième type de liaison comportent par exemple des pièces disposées de part et d'autre de manière à venir serrer le vitrage par l'extérieur (comme dans le deuxième type).

Selon une caractéristique propre à ce troisième type de liaison, les pièces des moyens de fixation sont reliées entre elles à travers le trou de fixation qui est ménagé dans le vitrage, généralement reliées par vissage ou tout autre moyen équivalent.

De tels moyens de fixation comportent par exemple un axe qui traverse le trou de fixation ménagé dans le vitrage.

En raison du et des trous de fixation que doit comporter le vitrage, ce troisième type de liaison est a contrario celui qui est communément utilisé pour les vitrages monolithiques.

Le ou les trous de fixation sont en effet avantageusement réalisés dans le vitrage monolithique avant la trempe de sorte que aucune étape n'est nécessaire après le formage du vitrage pour en assurer la fixation au dispositif d'entraînement.

De plus et par comparaison au premier et deuxième type de liaison, le fait que le vitrage soit traversé par les moyens de fixation est aussi avantageux sur le plan de la sécurité pour garantir notamment que le vitrage reste lié au dispositif d'entraînement en cas de choc(s).

Ainsi, le choix du premier type de liaison et du deuxième type de liaison dans le cas des vitrages feuilletés et du troisième type de liaison dans le cas des vitrages monolithiques résulte notamment de caractéristiques propres à chacun des vitrages.

Néanmoins, le choix de moyens de fixation d'un type donné de liaison en fonction de celui du vitrage n'est plus le seul facteur à prendre en compte, d'autres facteurs ont conduit à faire évoluer ce qui vient d'être présenté.

Une standardisation du dispositif d'entraînement est en particulier de plus en plus recherchée aujourd'hui par les constructeurs automobiles afin de pouvoir indifféremment monter dans la portière d'un véhicule, notamment d'un même modèle, un vitrage latéral de type monolithique ou de type feuilleté, c'est-à-dire d'avoir des vitrages qui soient interchangeables.

C'est l'une des raisons pour lesquelles, on a recherché à appliquer à des vitrages latéraux de type feuilleté le troisième type de liaison, communément utilisé avec des vitrages latéraux de type monolithique, et nécessitant au moins un trou de fixation dans le vitrage.

Dans le cas de ce troisième type de liaison, le vitrage comporte au moins une partie de fixation trouée, parfois deux parties de fixation distinctes selon le vitrage, qui sont réalisées dans la zone non visible située en dessous de la limite de visibilité.

Tel qu'indiqué précédemment, la ou les parties de fixation comportent par conséquent au moins un trou de fixation ménagé à travers le vitrage. Le trou de fixation débouchant sur les deux faces du vitrage est destiné à recevoir des moyens de fixation, lesdits moyens de fixation appliquant des efforts de serrage sur la partie de fixation et étant reliés au dispositif d'entraînement.

Le vitrage feuilleté selon la présente invention est destiné à être utilisé avec une telle liaison du troisième type et comporte par conséquent au moins une partie de fixation comportant un ou des trous de fixation configurés pour recevoir des moyens de fixation avec le dispositif d'entraînement du vitrage.

Par comparaison avec une liaison du premier type, une telle liaison du troisième type avec un vitrage troué permet notamment de supprimer toute opération de collage entre le vitrage et les moyens de fixation.

Par comparaison avec une liaison du deuxième type, une telle liaison du troisième type permet en outre un gain en encombrement.

Toutefois, la mise en oeuvre du troisième type de liaison avec trou de fixation pose avec un vitrage feuilleté des problèmes liés aux caractéristiques de comportement mécanique d'un vitrage feuilleté, lesquels problèmes expliquent d'ailleurs le fait que le premier ou deuxième type de liaison reste la solution de fixation très majoritairement retenue avec de tels vitrages feuilletés.

Tout d'abord, les feuilles de verre d'un vitrage feuilleté destiné à un véhicule automobile présentent une épaisseur faible, généralement au moins l'une des feuilles de verre présente une épaisseur inférieure à 2,6 mm, les feuilles de verre étant ou non d'égale épaisseur. C'est la raison pour laquelle, il n'est pas possible de leur appliquer une opération de trempe analogue à celle mise en oeuvre pour un vitrage monolithique.

La conséquence énoncée précédemment en relation avec le comportement mécanique est qu'un vitrage feuilleté possède des caractéristiques moindres que celles d'un vitrage monolithique, en particulier en terme de résistance aux contraintes et aux chocs.

Or, de telles contraintes et de tels chocs sont appliqués sur la ou les parties de fixation du vitrage d'une part par les moyens de fixation eux-mêmes du fait du serrage et, d'autre part, lors de l'utilisation, par exemple au cours d'un claquement de la portière.

Un autre problème rencontré avec un vitrage feuilleté muni d'un orifice de fixation est le fait que les trous réalisés dans chacune des feuilles de verre (avant le formage du vitrage feuilleté) se retrouvent ensuite décalés l'un par rapport à l'autre une fois réalisée l'opération d'assemblage des feuilles de verre extérieure et intérieure par l'intermédiaire de l'intercalaire.

En effet, en raison des rayons de courbure différents entre les faces extérieure et intérieure du vitrage feuilleté, le premier axe associé au trou ménagé dans la feuille de verre extérieure n'est pas coaxial avec le deuxième axe associé à l'autre trou ménagé dans la feuille de verre intérieure.

Ce phénomène de décalage (ou de désalignement) entre les axes des trous ménagés dans chacune des feuilles de verre du vitrage feuilleté pour obtenir l'orifice de fixation est encore parfois désigné par le terme anglais « *mismatch* ».

Ce phénomène de décalage a en outre pour conséquence de ne pas permettre une bonne reprise, une bonne répartition, des efforts sur chacune des feuilles de verre du vitrage feuilleté. Ainsi, les caractéristiques de comportement mécanique obtenues avec un vitrage feuilleté peuvent poser problème du fait des conséquences du phénomène de décalage.

Pour remédier à ces différents problèmes de décalage et de comportement mécanique, des solutions ont donc été recherchées.

L'une des solutions consiste à utiliser un insert qui, introduit dans l'orifice de fixation, traverse de part en part le vitrage auquel il est fixé par collage. Le document CN104476855 illustre de manière non limitative un exemple de réalisation d'un tel insert.

Une autre solution consiste en une conception particulière du vitrage feuilleté qui, dite « asymétrique », se caractérise par le fait qu'au moins la feuille de verre intérieure, plus courte, ne recouvre pas la ou les autres feuilles du vitrage au niveau de la partie de fixation.

Ainsi, un vitrage asymétrique comporte une feuille de verre intérieure qui n'est pas traversée par les moyens de fixation du vitrage avec le dispositif d'entraînement, ladite feuille de verre intérieure ne comprenant aucun trou pour les moyens de fixation grâce à quoi il n'y a plus de problème de décalage (« *mismatch* »).

La feuille de verre intérieure d'un tel vitrage asymétrique se trouve par conséquent liée au dispositif d'entraînement uniquement par l'intermédiaire des autres feuilles du vitrage, c'est à dire indirectement via l'intercalaire du fait de l'assemblage des feuilles constitutives du vitrage feuilleté.

Sur le plan mécanique, un vitrage feuilleté asymétrique est donc attaché au dispositif d'entraînement essentiellement par la feuille de verre extérieure, laquelle présente alors généralement une épaisseur plus importante.

Il ressort des solutions de l'art antérieur qui viennent d'être présentées différents inconvénients que la présente invention vise tout particulièrement à résoudre.

Tout d'abord, ces solutions nécessitent pour nombre d'entre elles au moins une opération de collage qui doit être mise en oeuvre après la fabrication du vitrage feuilleté, impactant dès lors le processus de fabrication et impliquant des coûts supplémentaires.

Ensuite, les solutions précitées impliquent une variation de l'épaisseur de la partie de fixation du vitrage feuilleté. En effet, soit une surépaisseur est créée du fait l'utilisation de pièces de liaison fixées par collage, soit c'est inversement une sous-épaisseur dans le cas d'un vitrage de type asymétrique.

Ainsi, les solutions connues ne permettent pas d'offrir au constructeur automobile l'interchangeabilité désirée entre vitrage monolithique et vitrage feuilleté en tant que vitrage latéral, laquelle en permettant une standardisation des moyens de fixation avec le dispositif d'entraînement, voire des moyens d'étanchéité associés au vitrage, est un levier important de réduction des coûts.

Enfin, on a surtout pu constater des problèmes de tenue dans le temps du vitrage feuilleté avec un fluage du matériau polymère de l'intercalaire qui survient notamment en raison des efforts de serrage appliqués sur la partie de fixation par les moyens de fixation.

Or, un tel fluage du matériau polymère de l'intercalaire a pour conséquence de modifier les surfaces d'appui sur le vitrage des moyens de fixation. Ainsi, ce fluage est susceptible d'entraîner un relâchement pouvant conduire à une casse inopinée au niveau de la partie de fixation ou entraîner un manque de rigidité du vitrage du fait de la réduction des efforts de serrage, autant de problèmes qui sont encore plus pénalisant dans le cas d'un vitrage équipant une portière sans cadre.

Par ailleurs, compte tenu des efforts en jeu, une casse du verre est également susceptible de se produire initialement lors du serrage des moyens de fixation, notamment par vissage, en raison de la concentration des contraintes. Ainsi, la fixation du vitrage feuilleté reste une opération souvent délicate à réaliser.

La liberté de conception du vitrage feuilleté et plus particulièrement son épaisseur s'en trouve limitée dès lors qu'il est admis qu'une épaisseur de feuille de verre au moins égale à 1,6 mm est requise pour pouvoir éviter qu'une telle casse ne survienne.

Ainsi, un vitrage feuilleté présente en général soit une épaisseur plus importante qu'un vitrage monolithique, soit les inconvénients précités.

US 2019/322161 A1 divulgue un vitrage feuilleté pour un véhicule automobile, notamment un vitrage latéral destiné à être monté coulissant dans une portière du véhicule, comportant au moins une feuille de verre extérieure et une feuille de verre intérieure assemblées par un intercalaire qui comporte au moins une feuille en matériau polymère, ledit vitrage comportant au moins une partie de fixation du vitrage traversée par au moins un orifice de fixation qui est formé par au moins un trou ménagé dans la feuille de verre extérieure, un trou ménagé dans l'intercalaire et un trou ménagé dans la feuille de verre intérieure, dans lequel au moins un organe de liaison est fixé au vitrage en traversant ledit orifice de fixation, et le trou ménagé dans une couche de verre est plus grand que celui ménagé dans l'autre couche de verre. Le trou 5 de la vitre extérieure est pourvu d'un plus grand diamètre que celui du trou de la vitre intérieure, et les deux centres des trous ont la même distance de leur bord inférieur respectif U, ce qui fait que la région inférieure du bord latéral du premier trou est disposée plus bas que la région correspondante du bord latéral du deuxième trou de la vitre intérieure.

La présente invention a notamment pour but de remédier aux inconvénients de l'art antérieur, plus particulièrement de proposer un vitrage feuilleté qui, présentant des caractéristiques améliorées en matière de tenue mécanique, soit en particulier à même d'être interchangeable avec un vitrage monolithique grâce à au moins un orifice de fixation comprenant un organe de liaison apte à coopérer avec des moyens de fixation dudit vitrage avec un dispositif d'entraînement.

### Résumé de l'invention

Dans ce but, l'invention propose un vitrage feuilleté du type décrit précédemment, caractérisé en ce que le premier axe du trou de la feuille de verre extérieure et le deuxième axe du trou de la feuille de verre intérieure sont décalés l'un par rapport à l'autre selon un décalage qui est configuré pour former une première surface de blocage sur une face intérieure de la feuille de verre extérieure et une deuxième surface de blocage sur une face extérieure de la feuille de verre intérieure, et en ce que ledit au moins un organe de liaison comporte une première surface configurée pour coopérer avec ladite première surface de blocage de la feuille de verre extérieure et une deuxième surface configurée pour coopérer avec ladite deuxième surface de blocage de la feuille de verre intérieure.

Conformément à l'invention, lesdits premier et deuxième axes des trous ménagés dans les feuilles de verre du vitrage sont volontairement décalés, d'un décalage ou écart déterminé, pour créer lesdites surfaces de blocage sur chacune des faces desdites feuilles de verre extérieure et intérieure du vitrage, faces intérieure et extérieure qui sont respectivement orientées vers l'intercalaire.

Il est important de noter que l'Homme du métier recherche au contraire toujours à minimiser, voire à supprimer, le phénomène de décalage (« *mismatch* ») entre les axes des trous d'un vitrage feuilleté de sorte que l'invention va à l'encontre des préjugés techniques qui le conduisent à rechercher autant que possible la coaxialité entre lesdits axes.

Dans l'art antérieur, le vitrage feuilleté ne comporte ainsi aucune surface fonctionnelle au niveau de l'orifice de fixation, c'est à dire qui soit en particulier apte à assurer un blocage de l'organe de liaison comme dans la présente l'invention.

Avantageusement, l'organe de liaison est configuré pour se bloquer automatiquement lors de son montage dans l'orifice de fixation.

Avantageusement, l'organe de liaison est configuré pour que lesdites première et deuxième faces viennent en appui, directement ou indirectement, contre les surfaces de blocage diamétralement opposées grâce à quoi ledit organe est alors bloqué, immobilisé, y compris lorsque l'assemblage des feuilles du vitrage feuilleté n'est pas encore réalisé.

Avantageusement, l'organe de liaison permet d'optimiser la transmission des efforts dans le vitrage, les efforts générés étant respectivement transmis à l'une et/ou l'autre des feuilles de verre par l'intermédiaire de la surface de blocage portée par chacune desdites feuilles.

Par exemple en cas de vibration entraînant une oscillation de la partie supérieure du vitrage, les efforts sont avantageusement transmis alternativement auxdites feuilles de verre extérieure et intérieure. En effet, les efforts sont alors transmis par les faces de l'organe en appui contre lesdites faces de blocage et cela même lorsqu'une feuille de matériau polymère issue de l'intercalaire est interposée.

Avantageusement, l'organe de liaison du vitrage comporte centralement un trou d'un diamètre donné qui est destiné à être traversé par des moyens de fixation. Ainsi, il est possible pour une valeur donnée de décalage des axes de standardiser l'organe de liaison en tant que pièce, seul le diamètre du trou variant pour s'adapter aux moyens de fixation de chaque application.

L'organe de liaison peut ne pas comporter initialement de trou lors de sa fabrication, voire lors son montage dans l'orifice de fixation du vitrage, ledit trou n'étant réalisé par tous moyens appropriés que postérieurement, notamment après son montage et l'assemblage des feuilles du vitrage, de manière à accroître la précision de positionnement du trou et ce faisant la qualité de la fixation du vitrage.

De préférence, le trou ménagé dans l'organe de liaison est lisse, dépourvu de filetage. Les moyens de fixation comportent par exemple au moins deux plaques trouées et un axe les traversant ainsi que l'organe de liaison au niveau du trou, l'axe comportant une tête apte à venir appliquer un serrage sur l'une des plaques et, à son extrémité libre opposée à la tête, un filetage apte à coopérer avec un trou fileté ménagé dans l'autre des plaques, en variante avec un écrou.

Les plaques sont agencées de part et d'autre de l'organe de liaison solidaire du vitrage et sont ensuite serrées par vissage des moyens de fixation respectivement contre les faces extérieure et intérieure de l'organe de sorte que ledit organe de liaison assure alors une fonction d'entretoise.

Avantageusement, en formant ainsi entretoise, l'organe de liaison évite en outre que les efforts de serrage exercés par les moyens de fixation par vissage ne soient appliqués directement sur les feuilles de verre du vitrage.

Avantageusement, l'organe de liaison est à même de limiter le fluage du matériau polymère au niveau de la partie de fixation du vitrage sollicitée par les moyens de fixation par vissage.

De préférence, l'organe de liaison est entièrement logé à l'intérieur de l'orifice de fixation, configuré pour être compris dans l'épaisseur du vitrage feuilleté.

Avantageusement, l'organe de liaison présente ainsi un encombrement particulièrement réduit par comparaison notamment à un insert selon l'art antérieur, lequel insert fixé par collage coopère généralement avec la face extérieure de la feuille de verre extérieure et/ou la face intérieure de la feuille de verre intérieure.

Avantageusement, ledit au moins un organe de liaison est réalisé dans une matière thermoplastique, de préférence par injection, grâce à quoi les différentes formes techniques comme les faces d'appui sont susceptibles d'être obtenues avec précision et de surcroît facilement.

Avantageusement, l'organe de liaison est réalisé dans un matériau choisi pour résister aux conditions de température et de pression survenant lors de l'assemblage du vitrage feuilleté grâce à quoi ledit organe est susceptible d'être monté préalablement audit assemblage de sorte qu'aucune opération postérieure à celui-ci n'est nécessaire.

Avantageusement, la première surface de blocage portée par la feuille de verre extérieure est orientée vers l'intérieur et la deuxième surface de blocage portée par la feuille de verre intérieure est orientée vers l'extérieur du vitrage.

La première surface de blocage est formée par une portion de face intérieure de la feuille de verre extérieure et ladite deuxième surface de blocage est formée par une portion de face extérieure de feuille de verre intérieure.

Avantageusement, ladite au moins une feuille en matériau polymère formant l'intercalaire est configurée pour recouvrir tout ou au moins une partie desdites surfaces de blocage de manière que le matériau polymère constituant ladite feuille (par exemple du polyvinylbutyral PVB) soit interposé entre les surfaces de l'organe de liaison et lesdites surfaces de blocage.

Avantageusement, ladite au moins une feuille en matériau polymère formant l'intercalaire est configurée pour ne pas recouvrir lesdites surfaces de blocage, le trou ménagé dans l'intercalaire présentant par exemple un diamètre supérieur au diamètre du trou de la feuille de verre extérieure et du trou de la feuille de verre intérieure.

Avantageusement, l'organe de liaison est configuré pour se loger à l'intérieur dudit orifice de fixation, dans l'épaisseur du vitrage, ledit organe de liaison comportant une face extérieure qui est à fleur par rapport à une face extérieure de la feuille de verre extérieure et une face intérieure qui est à fleur par rapport à une face intérieure de la feuille de verre intérieure.

Avantageusement, l'organe de liaison comporte une face extérieure et une face intérieure qui sont planes, lesdites faces étant globalement coplanaires, au niveau de la partie de fixation, à une face extérieure de la feuille de verre extérieure formant la surface extérieure du vitrage et à une face intérieure de la feuille de verre intérieure formant la surface intérieure du vitrage.

Avantageusement, l'organe de liaison est monté dans l'orifice de fixation préalablement à l'assemblage de la feuille de verre extérieure et de la feuille de verre intérieure par l'intercalaire grâce à quoi aucune opération postérieure à l'assemblage du vitrage n'est requise, la fixation dudit organe de liaison étant obtenue simultanément à l'assemblage desdites feuilles constituant ledit vitrage feuilleté.

Avantageusement, le trou de l'organe de liaison comporte au moins un chanfrein réalisé au niveau de l'une et/ou l'autre desdites faces extérieure et intérieure.

Avantageusement, l'organe de liaison comporte au moins une partie centrale muni du trou et une partie périphérique flexible qui est configurée pour être radialement élastique, ladite partie périphérique flexible comportant une couronne discontinue formée par des patins qui sont chacun reliés à la partie centrale par au moins un bras élastique apte à se déformer radialement, orthogonalement à l'axe.

Avantageusement, le trou de la feuille de verre extérieure comporte au moins un chanfrein réalisé au niveau de l'une et/ou l'autre desdites faces de la feuille et/ou le trou de la feuille de verre intérieure comporte au moins un chanfrein réalisé au niveau de l'une et/ou l'autre desdites faces de la feuille.

### Selon d'autres caractéristiques de l'invention :

- la première surface de blocage et la deuxième surface de blocage présentent respectivement une forme de croissant ;
- l'axe du trou et l'axe du trou sont décalés verticalement l'un par rapport à l'autre ;
- la première surface de blocage et la deuxième surface de blocage sont agencées diamétralement à l'opposé l'une de l'autre, lesdites première et deuxième surfaces de blocage étant agencées de manière symétrique par rapport à un axe de l'orifice de fixation du vitrage ;
- l'organe de liaison est fixé au vitrage par coopération de formes entre lesdites surfaces de l'organe et les surfaces de blocage ;
- l'organe de liaison est fixé au vitrage par collage par l'intermédiaire du matériau polymère de ladite au moins une feuille de l'intercalaire ;
- la première surface et la deuxième surface de l'organe de liaison sont agencées diamétralement à l'opposé l'une par rapport à l'autre, lesdites surfaces présentant une symétrie par rapport à un axe de l'organe de liaison ;
- l'organe de liaison est réalisé dans un matériau thermoplastique, par exemple en polyamide (PA) tel que du PA 6-6, en polyoxyméthylène (POM), en polybutylène téréphtalate (PBT) ;
- l'organe de liaison est configuré pour former une entretoise par rapport au vitrage feuilleté, notamment apte à limiter lors de l'assemblage du vitrage le fluage du matériau polymère de ladite au moins une feuille de l'intercalaire ;
- l'organe de liaison des moyens de fixation est réalisé en une seule pièce, monobloc ;
- l'organe de liaison présente un pourtour en forme d'ellipse ;
- l'organe de liaison comporte un premier chanfrein associé à la première surface et un deuxième chanfrein associé à la deuxième surface qui sont destinés à faciliter le montage dudit organe de liaison dans l'orifice de fixation ;
- l'organe de liaison est réalisé en deux pièces aptes à être solidarisées l'une avec l'autre par l'intermédiaire de moyens d'accrochage complémentaires portés par chacune desdites pièces ;
- lesdites pièces formant l'organe de liaison sont fixées ensemble par coopération de formes, de préférence par vissage, en variante par emboîtement élastique (ou clipsage) ou par un montage à force ou par collage ;
- l'organe de liaison est configuré pour se déformer radialement de manière élastique afin de pouvoir s'ajuster lorsque ledit organe de liaison est inséré dans l'orifice de fixation.

### Brève description des figures

D'autres caractéristiques et avantages de l'invention apparaitront au cours de la lecture de la description détaillée qui va suivre pour la compréhension de laquelle on se reportera aux dessins annexés dans lesquels :

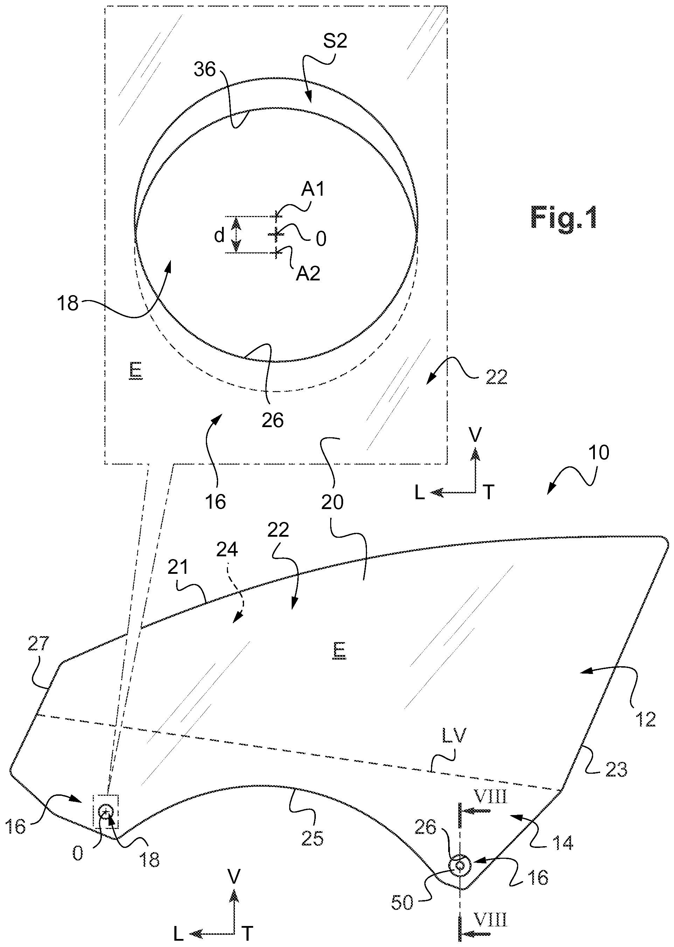

[Fig. 1] La figure 1 est une vue de côté qui représente, de l'extérieur, un vitrage feuilleté pour un véhicule automobile comportant un organe de liaison en une seule pièce selon un premier mode de réalisation et qui illustre la feuille de verre extérieure du vitrage feuilleté comportant dans sa zone non visible deux parties de fixation avant et arrière munies chacune d'un orifice de fixation dont l'un (arrière) comporte un organe pour le montage des moyens de fixation dudit vitrage avec un dispositif d'entraînement et dont l'autre (avant) est dépourvu d'organe afin de montrer au moyen d'un agrandissement la deuxième surface de blocage qui, portée par la feuille de verre intérieure, est obtenue en décalant les axes des trous formant ledit orifice ;

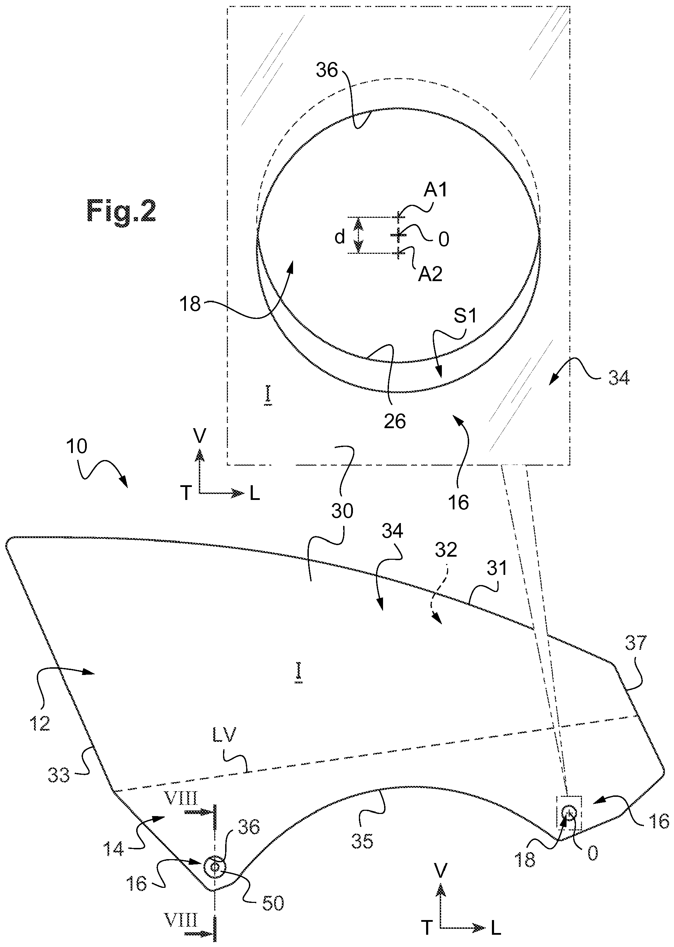

[Fig. 2] La figure 2 est une vue de côté qui représente, de l'intérieur, le vitrage feuilleté selon la figure 1 et qui illustre en outre l'orifice de fixation de la partie de fixation arrière du vitrage feuilleté comportant ledit organe de liaison configuré pour être monté dans l'orifice et traversé par des moyens fixation par vissage, ainsi qu'un agrandissement de l'orifice de fixation de la partie de fixation avant dépourvu dudit organe de liaison afin de montrer la première surface de blocage portée par la feuille de verre extérieure ;

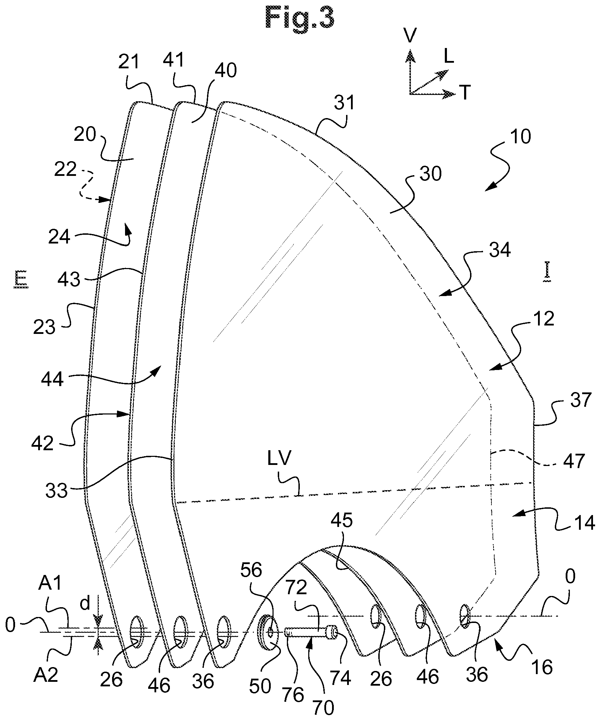

[Fig. 3] La figure 3 est une vue en perspective qui, en éclaté, représente le vitrage feuilleté comportant un organe de liaison selon le premier mode de réalisation des figures 1 et 2 et qui illustre, dans la partie de fixation arrière du vitrage, l'orifice de fixation formé en outre par un trou dans la feuille de verre extérieure et un trou dans la feuille de verre intérieure dont les axes sont décalés d'un décalage déterminé afin de créer les surfaces de blocage diamétralement opposées avec lesquelles coopèrent des première et deuxième surfaces complémentaires dudit organe de liaison ;

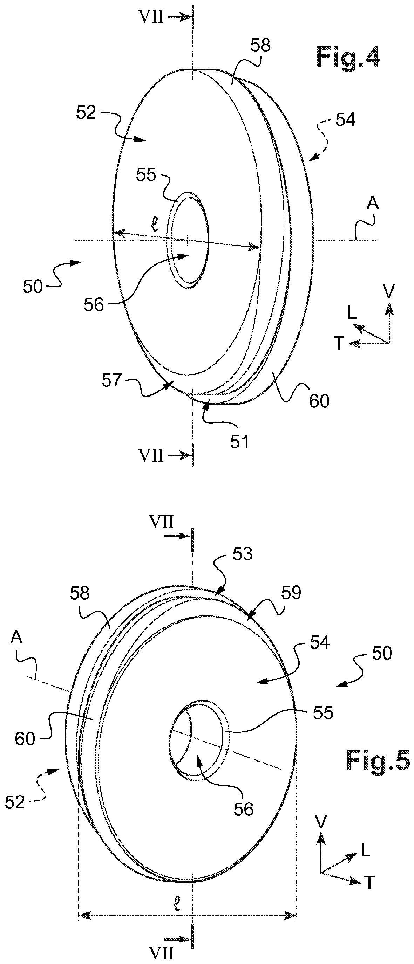

[Fig. 4] La figure 4 est une vue en perspective qui représente, vu du côté extérieur, l'organe de liaison selon le premier mode de réalisation et qui illustre la première surface d'appui destinée à coopérer, directement ou avec interposition de ladite au moins une feuille en matériau polymère de l'intercalaire, avec la première surface de blocage portée par la face intérieure de la feuille de verre extérieure ;
[Fig. 5] La figure 5 est une vue en perspective qui représente, vu du côté intérieur, l'organe de liaison selon le premier mode de réalisation et qui illustre la deuxième surface d'appui destinée à coopérer, directement ou avec interposition de ladite au moins une feuille en matériau polymère de l'intercalaire, avec la deuxième surface de blocage portée par la face extérieure de la feuille de verre intérieure ;

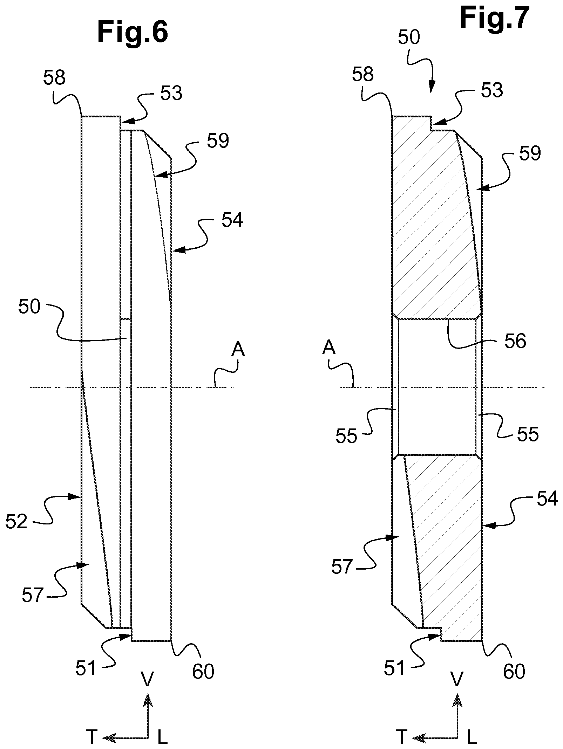

[Fig. 6] La figure 6 est une vue en bout qui représente l'organe de liaison selon les figures 4 et 5 et qui illustre la première face et la deuxième face de l'organe de liaison qui, symétriques par rapport à l'axe principal de l'organe, sont diamétralement opposées et respectivement orientées transversalement vers l'extérieur et vers l'intérieur ;
[Fig. 7] La figure 7 est une vue en coupe selon le plan VII-VII représenté sur les figures 4 et 5 qui représente l'organe de liaison et qui illustre ledit organe comportant centralement un trou destiné à être traversé par les moyens de fixation ;

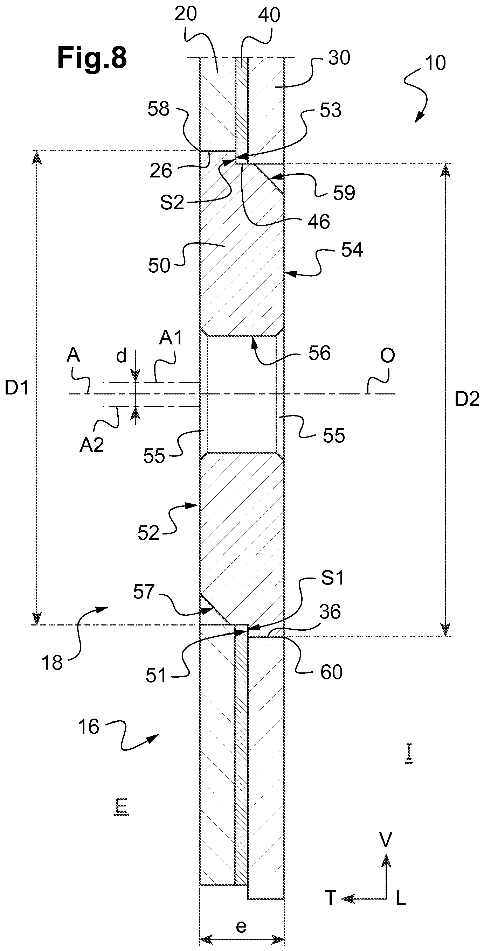

[Fig. 8] La figure 8 est une vue en coupe selon le plan VIII-VIII représenté sur les figures 1 et 2 qui représente l'organe de liaison monté dans l'orifice de fixation et qui illustre la première face de l'organe en appui contre la première surface de blocage et la deuxième face en appui contre la deuxième surface de blocage, respectivement avec interposition de la feuille en matériau polymère de l'intercalaire afin de coller ledit organe ;

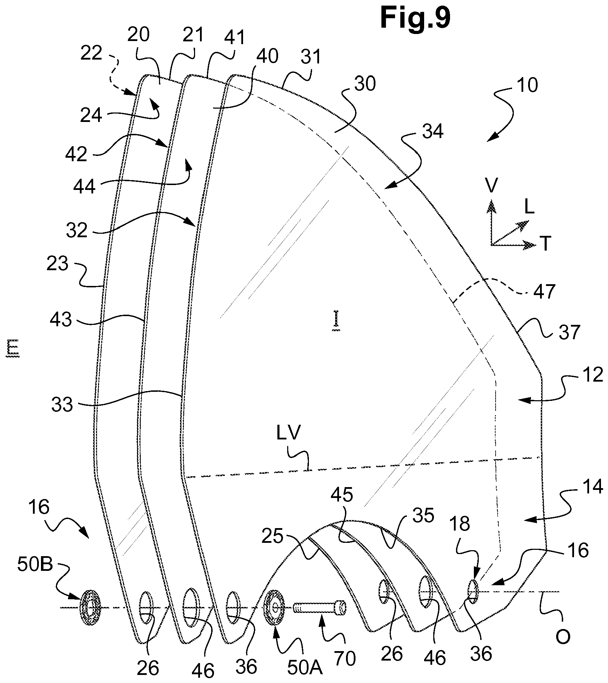

[Fig. 9] La figure 9 est une vue en perspective qui, en éclaté, représente le vitrage feuilleté comportant un organe de liaison selon un deuxième mode de réalisation et qui illustre, de manière analogue à la figure 3 dans la partie de fixation arrière du vitrage, l'orifice de fixation comportant un trou dans la feuille de verre extérieure et un trou dans la feuille de verre intérieure dont les axes sont décalés d'un décalage déterminé pour créer les surfaces de blocage diamétralement opposées avec lesquelles coopèrent des première et deuxième surfaces complémentaires dudit organe ;

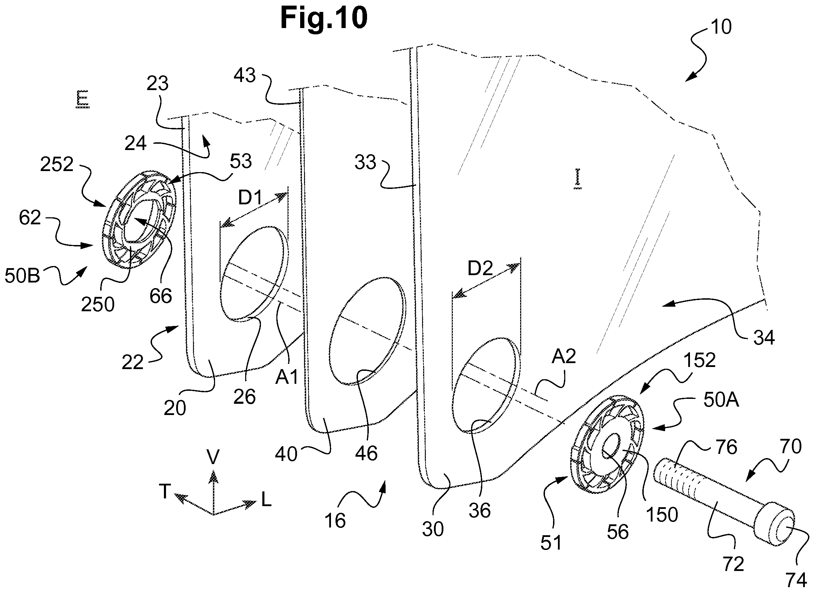

[Fig. 10] La figure 10 est une vue en éclaté qui représente en détail la partie de fixation arrière du vitrage feuilleté selon la figure 9 et qui illustre les trous dans les feuilles de verre extérieure et intérieure dont les axes sont décalés d'un décalage déterminé pour créer les surfaces de blocage ainsi que l'organe de liaison complémentaire réalisé en deux pièces configurées pour être fixées l'une avec l'autre ;

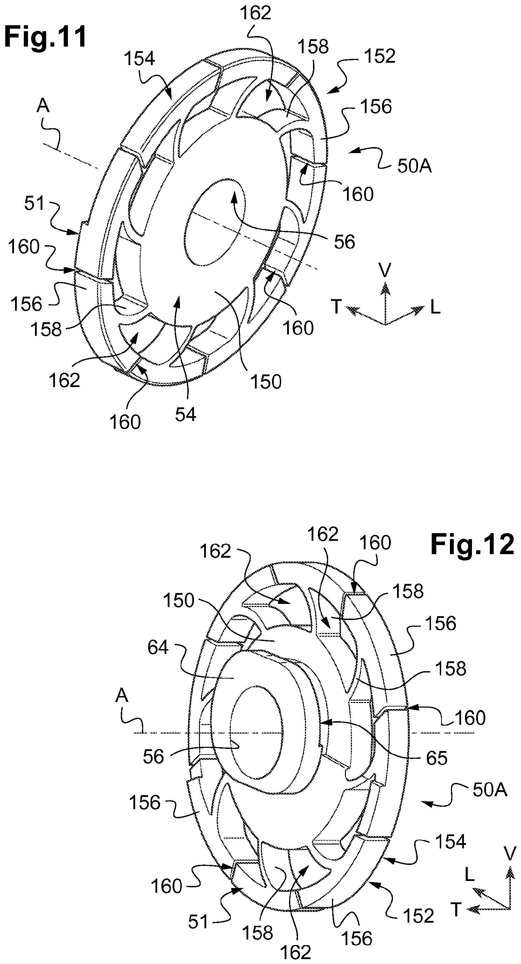

[Fig. 11] La figure 11 est une vue en perspective qui représente, vu du côté intérieur, la première pièce de l'organe de liaison selon le deuxième mode de réalisation et qui illustre une partie périphérique de ladite première pièce configurée pour être radialement déformable et entourant une partie centrale comportant l'ouverture pour le passage des moyens d'accrochage configurés pour obtenir une fixation suivant un vissage quart de tour ;
[Fig. 12] La figure 12 est une vue en perspective qui représente, vu du côté extérieur, la première pièce de l'organe de liaison selon la figure 11 et qui illustre la première surface d'appui portée par la partie périphérique flexible et des moyens d'accrochage portés par la partie centrale qui sont destinés à coopérer avec des moyens complémentaires portés par la deuxième pièce de l'organe pour obtenir ladite fixation par un vissage quart de tour entres lesdites première et deuxième pièce formant l'organe de liaison ;

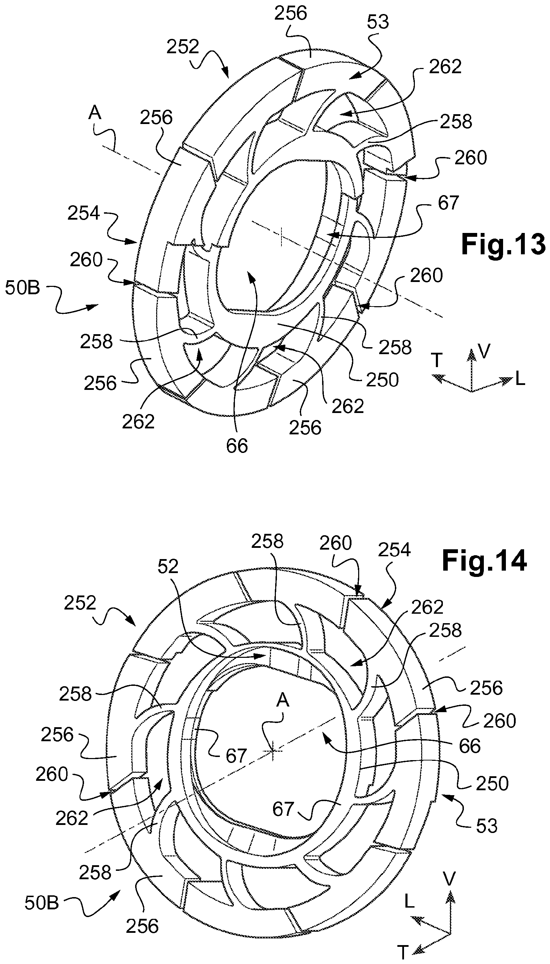

[Fig. 13] La figure 13 est une vue en perspective qui représente, vu du côté intérieur, la deuxième pièce de l'organe de liaison selon le deuxième mode de réalisation et qui illustre la partie périphérique de ladite deuxième pièce configurée pour être radialement déformable et entourant une partie centrale munie d'une ouverture destinée à être traversée par les moyens d'accrochage par coopération de formes solidaires de la première pièce ;
[Fig. 14] La figure 14 est une vue en perspective qui représente, vu du côté extérieur, la deuxième pièce de l'organe de liaison selon la figure 13 et qui illustre la partie centrale entourant l'ouverture qui comporte des formes techniques destinées à coopérer avec des formes complémentaires portées par la première pièce de l'organe pour former les moyens d'accrochage intervenant pour lier les deux pièces de l'organe ;

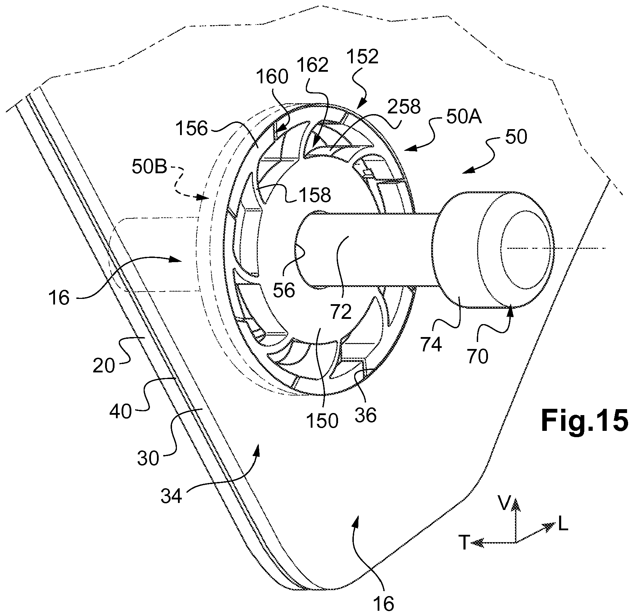

[Fig. 15] La figure 15 est une vue en perspective qui représente, vu du côté intérieur, la partie de fixation arrière du vitrage après le montage de l'organe de liaison et qui illustre la première pièce de l'organe à fleur par rapport à la face intérieure de la feuille de verre intérieure et traversée par un axe que comportent les moyens de fixation ;

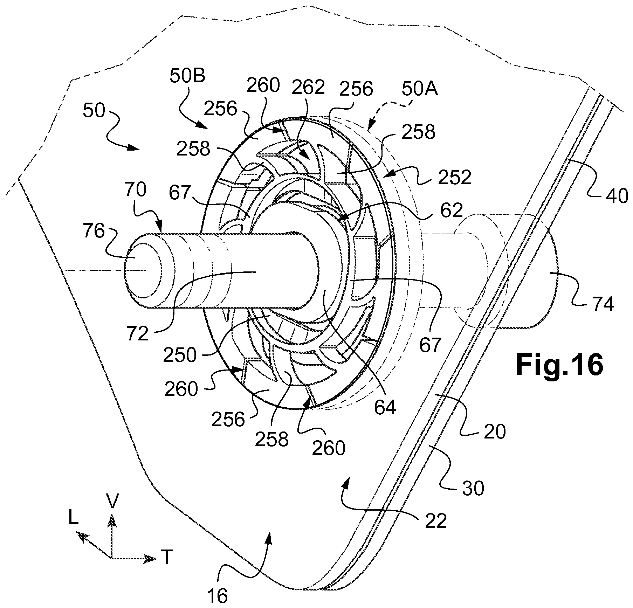

[Fig. 16] La figure 16 est une vue en perspective qui représente, vu du côté extérieur, la partie de fixation arrière du vitrage après le montage de l'organe de liaison et qui illustre la deuxième pièce de l'organe qui, solidaire de la première pièce, est à fleur par rapport à la face extérieure de la feuille de verre extérieure et qui est traversée par l'extrémité libre dudit axe ;

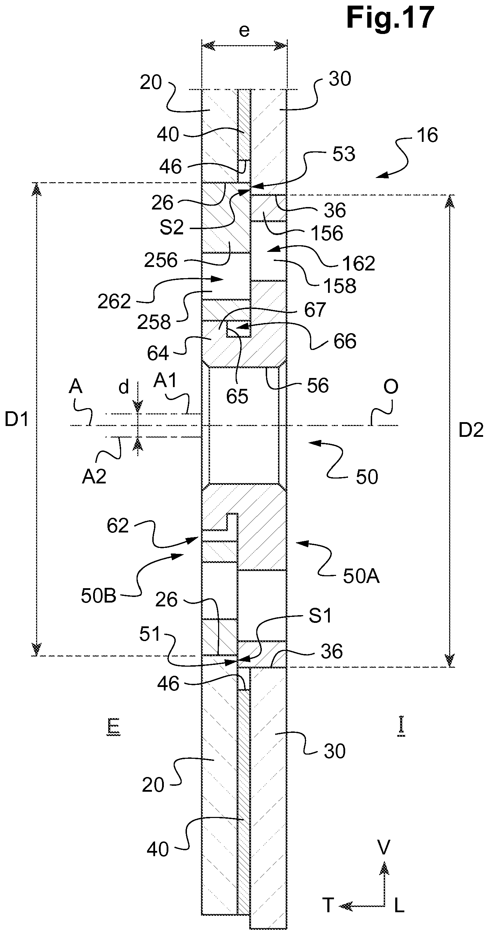

[Fig. 17] La figure 17 est une vue en coupe selon le plan XVII-XVII représenté sur les figures 15 et 16 qui représente les deux pièces de l'organe de liaison fixées ensemble et qui illustre l'organe dont la première face est en appui contre la première surface de blocage et la deuxième face de l'organe est en appui contre la deuxième surface de blocage, respectivement avec interposition de la feuille en matériau polymère de l'intercalaire.

### Description détaillée de l'invention

Dans la description détaillée qui suit, on utilisera de manière non limitative en référence au trièdre (L, V, T) représenté sur les figures, les orientations longitudinale, verticale et transversale.

Par convention, on utilisera dans la description les termes « avant » et « arrière » en référence à l'orientation longitudinale, les termes « supérieur » et « inférieur », ou « haut » et « bas », en référence à l'orientation verticale et les termes « extérieur » et « intérieur » ou « externe » et « interne » en référence à l'orientation transversale dudit trièdre (L, V, T).

Dans la suite de la description, les modes de réalisation et/ou variantes de l'invention seront avantageusement décrits par comparaison et, sur les figures, des éléments présentant des fonctions analogues ou des structures identiques seront désignés par une même référence.

On a représenté sur les figures 1 à 8 un vitrage 10 feuilleté pour un véhicule automobile selon un premier mode de réalisation de l'invention.

Le vitrage 10 feuilleté selon l'invention sera décrit à titre d'exemple non limitatif dans le cadre d'une application comme vitrage latéral. Un tel vitrage latéral est destiné à être monté coulissant, selon l'orientation verticale, dans une portière (non représentée) du véhicule.

Dans une telle application pour un véhicule automobile, le vitrage latéral réalise une séparation entre un espace E extérieur qui est extérieur au véhicule et un espace I intérieur qui est intérieur au véhicule.

Ainsi, les termes « extérieur » et « intérieur » appliqués ci-après au vitrage 10 feuilleté le sont conformément à cette notion d'espace E extérieur et d'espace I intérieur.

Les figures 1 à 3 illustrent plus particulièrement ledit vitrage 10 feuilleté successivement en vue de côté de l'extérieur, de l'intérieur et en éclaté.

Le vitrage 10 feuilleté comporte une zone 12, dite visible, et une zone 14, dite non visible, qui s'étendent de part et d'autre d'une limite LV de visibilité du vitrage, la zone 14 non visible correspondant à une partie inférieure du vitrage dissimulée en permanence dans la portière.

On a représenté, sur les figures 1 et 2, la limite LV de visibilité en pointillés afin de la matérialiser. La limite LV de visibilité correspond généralement à un joint lécheur monté solidaire de la portière, ledit joint étant agencé pour coopérer avec le vitrage 10 feuilleté, en particulier lorsque ledit vitrage 10 coulisse relativement à la portière.

Le vitrage 10 feuilleté comporte, dans ladite zone 14 non visible située en dessous de la limite LV de visibilité, au moins une partie 16 de fixation qui comporte au moins un orifice 18 de fixation destiné à recevoir des moyens de fixation du vitrage 10 avec un dispositif d'entraînement (non représenté) dudit vitrage 10.

Le vitrage 10 feuilleté comporte au moins un orifice 18 de fixation qui présente un axe O d'orientation transversale selon le trièdre (L, V, T).

Les moyens de fixation entre le vitrage 10 et le dispositif d'entraînement sont destinés à traverser la partie 16 de fixation du vitrage 10 par ledit au moins un orifice 18 de fixation.

De préférence, les moyens de fixation associés au vitrage 10 sont des moyens de fixation par vissage, c'est à dire aptes à réaliser une liaison du troisième type selon l'art antérieur présenté précédemment, en variante tout autre moyen équivalent.

De manière connue, de tels moyens de fixation sont configurés pour être rendus solidaires du vitrage 10 par une liaison mettant en oeuvre un vissage, appliquant ainsi transversalement des efforts de serrage sur chacune des parties 16 de fixation.

Le dispositif d'entraînement (parfois appelé « lève-vitre ») est commandé sélectivement pour déplacer, suivant un mouvement de translation, ledit vitrage 10 en hauteur entre au moins une position haute, dite de fermeture, de la baie de la portière et une position basse, dite d'ouverture de tout ou partie de ladite baie.

Le vitrage 10 feuilleté comporte ici deux parties 16 de fixation, respectivement une première partie 16 de fixation située vers l'avant et une deuxième partie 16 de fixation située vers l'arrière.

Les première et deuxième parties 16 de fixation sont par exemple formées par des excroissances, séparées l'une de l'autre selon l'orientation longitudinale.

De préférence, chacune desdites première et deuxième parties 16 de fixation comporte au moins un orifice 18 de fixation.

En variante non représentée, l'une seulement desdites première et deuxième parties 16 de fixation comporte un orifice 18 de fixation, de préférence celle des parties 16 de fixation qui est située à l'arrière du vitrage 10.

Selon cette variante, l'autre partie 16 de fixation située à l'avant du vitrage 10 ne comporte donc pas d'orifice 18 de fixation mais coopère avec des moyens de fixation pour réaliser une liaison du premier ou du deuxième type décrit précédemment.

Ainsi, un même vitrage 10 feuilleté peut comporter des moyens de fixation différents, soit selon l'exemple une liaison du premier ou deuxième type à l'avant et une liaison du troisième type à l'arrière dont les moyens de fixation traversent un orifice 18 de fixation du vitrage 10.

En variante non représentée, le vitrage 10 feuilleté comporte une seule partie 16 de fixation, ladite partie 16 de fixation comportant par exemple au moins un orifice 18 de fixation, préférentiellement deux orifices 18 de fixation espacés l'un de l'autre selon la direction longitudinale destinés à recevoir des moyens de fixation pour réaliser une liaison du troisième type telle que présenté précédemment.

Le nombre de partie(s) 16 de fixation du vitrage 10 est, comme la forme de ce dernier, déterminé en fonction de l'application, c'est-à-dire du véhicule automobile, tout comme le nombre d'orifice 18 de fixation est déterminé en fonction du dispositif d'entraînement du vitrage.

Tel qu'illustré sur les figures 1 à 3, le vitrage 10 feuilleté comporte au moins une feuille 20 de verre extérieure et une feuille 30 de verre intérieure qui sont assemblées par l'intermédiaire d'un intercalaire 40.

La feuille 20 de verre extérieure comporte une face 22 extérieure et une face 24 intérieure, respectivement orientées vers l'espace E extérieur et vers l'espace I intérieur.

Tel qu'illustré sur la figure 1, la feuille 20 de verre extérieure comporte successivement un bord 21 supérieur, un bord 23 arrière, un bord 25 inférieur et un bord 27 avant, lesdits bord 21 supérieur et bord 25 inférieur opposés s'étendant globalement selon l'orientation longitudinale et lesdits bord 23 arrière et bord 27 avant opposés s'étendant globalement selon l'orientation verticale.

Le bord 25 inférieur de la feuille 20 de verre extérieure présente centralement, entre deux excroissances formant lesdites parties 16 de fixation, un tronçon curviligne formant un profil concave orienté vers le bas.

Dans chacune desdites parties 16 de fixation, la feuille 20 de verre extérieure comporte un trou 26 la traversant. Le trou 26 ménagé dans ladite feuille 20 de verre extérieure présente un axe A1, dit premier axe, et un diamètre « D1 ».

Avantageusement, le trou 26 de la feuille 20 de verre extérieure est chanfreiné au niveau de l'une et/ou l'autres desdites faces, respectivement la face 22 extérieure et la face 24 intérieure.

La feuille 30 de verre intérieure comporte une face 32 extérieure et une face 34 intérieure, respectivement orientées vers l'espace E extérieur et vers l'espace I intérieur.

Tel qu'illustré sur la figure 2, la feuille 30 de verre intérieure comporte successivement un bord 31 supérieur, un bord 33 arrière, un bord 35 inférieur et un bord 37 avant, lesdits bord 31 supérieur et bord 35 inférieur opposés s'étendant globalement selon l'orientation longitudinale et lesdits bord 33 arrière et bord 37 avant opposés s'étendant globalement selon l'orientation verticale.

Le vitrage 10 feuilleté illustré aux figures 1 à 3 est un vitrage symétrique, c'est-à-dire un vitrage dans lequel la feuille 30 de verre intérieure recouvre totalement la feuille 20 de verre extérieure, lesdites feuilles de verre étant de dimensions identiques.

Les parties 16 de fixation du vitrage 10 sont constituées par la feuille 20 de verre extérieure, l'intercalaire 40 et la feuille 30 de verre intérieure comme l'illustre en détail la coupe de la figure 8 selon le plan VIII-VIII qui est représenté sur les figures 1 et 2.

De préférence, la feuille 20 de verre extérieure et la feuille 30 de verre intérieure sont ici de même épaisseur, la feuille 20 de verre extérieure présentant selon l'orientation transversale une épaisseur qui est égale à l'épaisseur de la feuille 30 de verre intérieure.

En variante, la feuille 30 de verre intérieure est plus mince que la feuille 20 de verre extérieure, c'est-à-dire présente une épaisseur inférieure.

Le bord 35 inférieur comporte un profil complémentaire de celui du bord 25 inférieur de la feuille 20 de verre extérieure. Ainsi, le bord 35 inférieur de la feuille 30 de verre intérieure présente centralement un tronçon curviligne formant un profil concave orienté vers le bas.

Dans chacune desdites parties 16 de fixation, la feuille 30 de verre intérieure comporte un trou 36 la traversant. Le trou 36 ménagé dans la feuille 30 de verre intérieure présente un axe A2, dit deuxième axe, et un diamètre « D2 ».

Avantageusement, le trou 36 de la feuille 30 de verre intérieure est chanfreiné au niveau de l'une et/ou l'autres desdites faces, respectivement la face 32 extérieure et la face 34 intérieure.

L'intercalaire 40 comporte au moins une feuille en matériau polymère, l'intercalaire 40 reliant ensemble la feuille 20 de verre extérieure et la feuille 30 de verre intérieure du vitrage 10.

Dans ce premier mode de réalisation, l'intercalaire 40 comporte une seule feuille en matériau polymère.

De préférence, ladite feuille en matériau polymère formant l'intercalaire 40 est une feuille comportant du polyvinylbutyral (PVB). L'épaisseur de l'intercalaire 40 est par exemple comprise entre 0,3 mm et 1,2 mm.

En variante non représentée, l'intercalaire 40 est une structure multicouche, c'est-à-dire constituée par plus d'une feuille.

L'intercalaire 40 comporte par exemple deux feuilles en matériau polymère telles qu'une première feuille et une deuxième feuille respectivement en polyvinylbutyral (PVB) dont l'une présente avantageusement des propriétés d'atténuation acoustique. Cette structure bicouches formant l'intercalaire 40 est encore appelée, selon le terme anglais, « *bilayer* ».

L'intercalaire 40 pourrait comporter plus de deux feuilles et par exemple être constitué de trois feuilles en matériau polymère, soit un « *trilayer* » en anglais, comportant par exemple une feuille en polyethylene terephtalate (PET) disposée entre deux feuilles de polyvinylbutyral (PVB) dont l'une présente avantageusement des propriétés d'atténuation acoustique ou encore une feuille de polyvinylbutyral (PVB) qui, présentant avantageusement des propriétés d'atténuation acoustique, est disposée entre deux autres feuilles de polyvinylbutyral (PVB).

Tel qu'illustré sur la figure 3, l'intercalaire 40 comporte une face 42 extérieure située en vis-à-vis de la face 24 intérieure de la feuille 20 de verre extérieure et une face 44 intérieure située en vis-à-vis de la face 32 extérieure de la feuille 30 de verre intérieure.

L'intercalaire 40 comporte successivement un bord 41 supérieur, un bord 43 arrière, un bord 45 inférieur et un bord 47 avant, lesdits bord 41 supérieur et bord 45 inférieur opposés s'étendant globalement selon l'orientation longitudinale et lesdits bord 43 arrière et bord 47 avant opposés s'étendant globalement selon l'orientation verticale.

L'intercalaire 40 s'étend dans la partie 14 non visible, c'est-à-dire en dessous de la limite LV de visibilité du vitrage 10.

L'intercalaire 40 comporte au moins une ouverture préférentiellement formée par un trou 46 circulaire, lequel trou 46 est centré sur un axe O de référence de l'orifice 18 de fixation, soit au décalage près globalement aligné avec le trou 26 de la feuille 20 de verre extérieure et le trou 36 de la feuille 30 de verre intérieure.

De préférence, le trou 46 présente ici un diamètre qui est égal aux diamètres D1 et D2 des trous 26 et 36.

L'orifice 18 de fixation du vitrage 10 est formé par au moins le trou 26 présentant le premier axe A1 qui est ménagé dans la feuille 20 de verre extérieure, le trou 46 ménagé dans l'intercalaire 40 et le trou 36 présentant le deuxième axe A2 qui est ménagé dans la feuille 30 de verre intérieure.

Selon une caractéristique de l'invention, le premier axe A1 du trou 26 de la feuille 20 de verre extérieure et le deuxième axe A2 du trou 36 de la feuille 30 de verre intérieure sont décalés l'un par rapport à l'autre selon un décalage « d ».

Le décalage « d » est configuré pour former une première surface S1 de blocage sur la face 24 intérieure de la feuille 20 de verre extérieure et une deuxième surface S2 de blocage sur la face 34 intérieure de la feuille 30 de verre intérieure.

De préférence, l'axe A1 du trou 26 et l'axe A2 du trou 36 sont décalés verticalement l'un par rapport à l'autre, c'est-à-dire selon l'orientation verticale du trièdre (L, V, T).

Le décalage « d » correspond ainsi à un écart vertical entre l'axe A1 et l'axe A2 ce qui confère à l'orifice 18 de fixation une forme non-circulaire, par exemple une forme oblongue selon la valeur dudit décalage.

De préférence, le diamètre D1 du trou 26 dans la feuille 20 de verre extérieure est égal au diamètre D2 du trou 36 dans la feuille de verre intérieure.

La forme non-circulaire de l'orifice 18 de fixation correspond à la superposition du trou 26 et du trou 36 qui, respectivement circulaire, ne sont pas coaxiaux du fait du décalage « d » entre les axes A1 et A2.

Le vitrage 10 comporte au moins un organe 50 de liaison dont le premier mode de réalisation plus particulièrement illustré par les figures 4 à 7 sera décrit ci-après en relation avec le vitrage 10 feuilleté.

La première surface S1 de blocage sur la face 24 intérieure de la feuille 20 de verre extérieure est plus particulièrement visible sur l'agrandissement de la figure 2 centré sur la partie 16 de fixation avant. Tel qu'illustré sur cet agrandissement, la première surface S1 de blocage présente une forme de croissant.

La deuxième surface S2 de blocage sur la face 34 intérieure de la feuille 30 de verre intérieure est plus particulièrement visible sur l'agrandissement de la figure 1 centré sur la partie 16 de fixation avant. Tel qu'illustré sur cet agrandissement, la deuxième surface S2 de blocage présente une forme de croissant.

La première surface S1 de blocage et la deuxième surface S2 de blocage sont agencées diamétralement à l'opposé l'une de l'autre, lesdites première et deuxième surfaces S1, S2 de blocage étant agencées symétriquement, ici verticalement, par rapport à l'axe O de référence de l'orifice 18 de fixation du vitrage 10.

De préférence, lesdites première et deuxième surfaces S1, S2 de blocage sont en effet agencées symétriquement selon l'orientation verticale. En variante, lesdites première et deuxième surfaces S1, S2 de blocage sont agencées symétriquement selon une autre orientation, par exemple selon l'orientation longitudinale.

L'axe O de référence correspond à un axe moyen par rapport à l'axe A1 du trou 26 et à l'axe A2 du trou 36 qui sont préférentiellement décalés verticalement, ledit axe O de référence d'orientation transversale formant un axe de symétrie pour l'orifice 18 de fixation.

La première surface S1 de blocage portée par la feuille 20 de verre extérieure est orientée transversalement vers l'intérieur tandis que la deuxième surface S2 de blocage portée par la feuille 30 de verre intérieure est orientée transversalement vers l'extérieur du vitrage 10.

La première surface S1 de blocage est formée par une portion de la face 24 intérieure de la feuille 20 de verre extérieure et ladite deuxième surface S2 de blocage étant formée par une portion de la face 32 extérieure de feuille 30 de verre intérieure.

Par comparaison, l'orifice 18 de la partie 16 de fixation située à l'arrière qui est illustré sur les figures 1 et 2 comporte un organe 50 de liaison configuré pour coopérer avec des moyens 70 de fixation dudit vitrage 10 avec un dispositif d'entraînement (non représenté).

Ainsi qu'on l'aura compris, un organe 50 de liaison est donc normalement monté dans chacun des orifices 18 de fixation que comportent les parties 16 de fixation avant et arrière du vitrage 10.

Tel illustré par les figures 4 à 7, l'organe 50 de liaison comporte une première surface 51 configurée pour coopérer avec ladite première surface S1 de blocage de la feuille 20 de verre extérieure et une deuxième surface 53 configurée pour coopérer avec ladite deuxième surface S2 de blocage de la feuille 30 de verre intérieure.

La première surface 51 et la deuxième surface 53 de l'organe 50 de liaison présentent respectivement une forme de croissant, c'est-à-dire une forme complémentaire de la forme desdites première et deuxième surfaces S1 et S2 de blocage résultant du décalage « d » vertical entre les axes A1 et A2.

La figure 8 illustre plus particulièrement la coopération entre la première surface 51 de l'organe 50 de liaison et ladite première surface S1 de blocage, d'une part, et la coopération entre la deuxième surface 53 de l'organe 50 de liaison et ladite deuxième surface S2 de blocage, d'autre part.

De préférence, l'organe 50 de liaison est fixé au vitrage 10 par coopération de formes et/ou par collage.

Avantageusement, l'organe 50 de liaison est configuré pour traverser ledit orifice 18 de fixation de part en part de manière à former une entretoise par rapport au vitrage 10 feuilleté.

De préférence, l'organe 50 de liaison ne s'étend pas en saillie hors de l'orifice 18 de fixation, laissant notamment libre la face 22 extérieure de la feuille 20 de verre extérieure comme la face 34 intérieure de la feuille 30 de verre intérieure.

Avantageusement, l'organe 50 de liaison est configuré pour se loger à l'intérieur dudit orifice 18 de fixation, dans l'épaisseur E du vitrage 10 feuilleté telle qu'illustré sur la figure 8.

L'organe 50 de liaison comporte une face 52 extérieure et une face 54 intérieure. De préférence, l'organe 50 de liaison comporte une face 52 extérieure et une face 54 intérieure qui sont ici planes.

Tel qu'illustré par la figure 8, l'organe 50 de liaison est configuré pour que la face 52 extérieure soit à fleur par rapport à la face 22 extérieure de la feuille 20 de verre extérieure et la face 54 intérieure à fleur par rapport à la face 34 intérieure de la feuille 30 de verre intérieure.

Autrement dit, lesdites faces 52, 54 sont chacune globalement coplanaires, au niveau de la partie de fixation, à la face 22 extérieure de la feuille 20 de verre extérieure formant la surface extérieure du vitrage 10 feuilleté et à la face 34 intérieure de la feuille 30 de verre intérieure formant la surface intérieure du vitrage 10 feuilleté, respectivement.

Avantageusement, l'organe 50 de liaison est configuré pour former une entretoise afin notamment de limiter lors de l'assemblage du vitrage 10 feuilleté le fluage du matériau polymère de ladite au moins une feuille de l'intercalaire 40.

La première surface 51 et la deuxième surface 53 de l'organe 50 de liaison sont agencées diamétralement à l'opposé l'une par rapport à l'autre, lesdites surfaces 51, 53 présentant une symétrie par rapport à un axe A principal de l'organe 50 de liaison.

Avantageusement, ledit organe 50 de liaison est muni d'un trou 56 centré sur ledit axe A, ledit trou 56 étant destiné à recevoir les moyens 70 de fixation dudit vitrage 10 feuilleté pour le lier en déplacement avec un dispositif d'entraînement.

A titre d'exemple non limitatif, le trou 56 de l'organe 50 de liaison présente un diamètre compris entre 3 mm et 12 mm.

De préférence, le trou 56 est ici lisse intérieurement.

De préférence, l'organe 50 de liaison comporte au moins un chanfrein 55 réalisé au niveau du bord délimitant le trou 56 sur l'une et/ou l'autre desdites face 52 extérieure et face 54 intérieure.

L'axe A principal de l'organe 50 de liaison est destiné à être coaxial, c'est-à-dire confondu, avec l'axe O de référence de l'orifice 18 de fixation du vitrage 10 feuilleté, une fois son montage effectué.

Dans ce premier mode de réalisation, l'organe 50 de liaison est avantageusement réalisé en une seule pièce, monobloc, notamment par injection d'un matériau thermoplastique.

De préférence, l'organe 50 de liaison est réalisé dans un matériau thermoplastique, par exemple notamment en polyamide (PA) par exemple du PA 6-6, en polyoxyméthylène (POM), en polybutylène téréphtalate (PBT).

En variante, l'organe 50 de liaison est réalisé en au moins deux pièces, avantageusement configurées pour être fixées ensemble par tout moyen approprié, notamment par coopération de formes.

Tel qu'illustré sur les figures 4 à 7, l'organe 50 de liaison présente un pourtour en forme d'ellipse sur l'axe majeur duquel sont situés l'axe A1 du trou 26 et l'axe A2 du trou 36 séparé d'une distance correspondant au décalage « d ».

Tel qu'illustré sur la figure 5, la distance « I » au niveau de l'axe mineur de l'organe 50 de liaison en forme d'ellipse correspond sensiblement au diamètre « D1 » du trou 26 ou au diamètre « D2 » du trou 36.

Avantageusement, la forme de l'organe 50 de liaison est déterminée en fonction de la configuration de l'orifice 18 de fixation, en particulier en fonction desdites première et deuxième surfaces S1 et S2 de blocage.

De préférence, l'organe 50 de liaison comporte un premier chanfrein 57 qui, associé à la première surface 51, est réalisé dans un tronçon d'un bord 58 extérieur de l'organe 50 et un deuxième chanfrein 59 qui, associé à la deuxième surface 53, est réalisé dans un tronçon d'un bord 60 intérieur de l'organe 50.

Tel qu'illustré sur les figures 4 à 7, le bord 58 extérieur et le bord 60 intérieur appartiennent chacun à une partie extérieure et une partie intérieure de l'organe 50 présentant chacune une forme générale de « rondelle », décalée verticalement l'une par rapport à l'autre mais ayant en commun le trou 56 traversant ledit organe 50 suivant l'axe A.

Avantageusement, le premier chanfrein 57 et le deuxième chanfrein 59 sont destinés à faciliter le montage dudit organe 50 de liaison dans l'orifice 18 de fixation.

De préférence, le montage de l'organe 50 de liaison est réalisé de la manière décrite ci-après.

Avantageusement, l'organe 50 de liaison est monté dans l'orifice 18 de fixation préalablement à l'assemblage de la feuille 20 de verre extérieure et de la feuille 30 de verre intérieure par l'intercalaire 40, grâce à quoi aucune opération postérieure à l'assemblage du vitrage 10 feuilleté n'est requise.

Avantageusement, la fixation dudit organe 50 de liaison est obtenue au moins par coopération de formes préalablement à l'assemblage desdites feuilles 20 et 30 de verre et de l'intercalaire 40 constituant ledit vitrage 10 feuilleté.

L'organe 50 de liaison est tout d'abord disposé dans une position dite d'insertion dans laquelle l'organe 50 est placé horizontalement par rapport à l'orifice 18 de fixation de sorte que l'axe A de l'organe 50 de liaison s'étende selon l'orientation verticale (et non pas transversale).

L'organe 50 de liaison est ensuite introduit transversalement au niveau du centre de l'orifice 18 de fixation, indifféremment du côté extérieur par le trou 26 ou du côté intérieur par le trou 36 lesquels présentent un même diamètre (D1 = D2) correspondant à la distance « I » de l'organe 50 de liaison.

Une fois introduit, l'organe 50 de liaison est alors basculé vers sa position dite d'utilisation, pivotant autour d'un axe de rotation d'orientation longitudinale, jusqu'à ce que les surfaces 51, 53 de l'organe 50 soient respectivement en appui contre les surfaces S1, S2 de blocage.

Avantageusement, l'organe 50 de liaison est ainsi fixé au vitrage 10 par coopération de formes entre lesdites surfaces 51, 53 de l'organe 50 et les surfaces S1, S2 de blocage.

L'organe 50 de liaison est alors bloqué dans sa position d'utilisation, monté à l'intérieur de l'orifice 18 de fixation formé par lesdits trous 26 et 36. Dans cette position d'utilisation, l'organe 50 de liaison pourrait bien entendu être débloqué en procédant à une rotation en sens inverse à celle opérée lors de son montage.

De préférence, l'organe 50 de liaison est également fixé au vitrage 10 par collage, en particulier par l'intermédiaire du matériau polymère de ladite au moins une feuille de l'intercalaire 40.

Avantageusement, ladite au moins une feuille en matériau polymère formant l'intercalaire 40 est configurée pour recouvrir tout ou au moins une partie desdites surfaces S1, S2 de blocage de manière qu'une couche de matériau polymère constituant ladite feuille (par exemple du polyvinylbutyral PVB) soit interposée entre les surfaces 51, 53 de l'organe 50 de liaison et lesdites surfaces S1, S2 de blocage.

En variante non représentée, ladite au moins une feuille en matériau polymère formant l'intercalaire 40 est configurée pour ne pas recouvrir lesdites surfaces S1, S2 de blocage, le trou 46 ménagé dans l'intercalaire 40 présentant par exemple un diamètre supérieur au diamètre du trou 26 de la feuille 20 de verre extérieure et du trou 36 de la feuille 30 de verre intérieure.

Une fois l'organe 50 de liaison monté dans l'orifice 18, on procède de manière conventionnelle à l'assemblage du vitrage 10 feuilleté afin de lier ensemble la feuille 20 de verre extérieure et la feuille 30 de verre intérieure par l'intermédiaire de l'intercalaire 40.

Avantageusement, l'organe 50 de liaison est monté préalablement à l'assemblage complet du vitrage 10 feuilleté et cela de manière imperdable une fois ledit assemblage réalisé.

Les moyens 70 de fixation sont alors susceptibles d'être mis en place pour relier le vitrage 10 feuilleté à un dispositif d'entraînement.

Les moyens 70 de fixation comportent par exemple au moins deux plaques trouées (non représentées) et un axe 72 les traversant ainsi que l'organe 50 de liaison au niveau du trou 56. Tel qu'illustré sur la figure 3, l'axe 72 comporte une tête 74 apte à venir appliquer un serrage sur l'une des plaques et, à une extrémité 76 libre opposée à la tête 74, comporte un filetage apte à coopérer avec un trou fileté ménagé dans l'autre des plaques, en variante avec un écrou.

Les plaques des moyens 70 de fixation sont agencées de part et d'autre de l'organe 50 de liaison solidaire du vitrage et sont ensuite serrées par vissage respectivement contre les faces 52 extérieure et 54 intérieure de l'organe 50 de sorte que ledit organe 50 de liaison assure alors comme indiqué précédemment une fonction d'entretoise.

Avantageusement, l'organe 50 de liaison évite que les efforts de serrage exercés par les moyens 70 de fixation ne soient appliqués directement sur les feuilles 20, 30 de verre du vitrage 10 feuilleté, grâce à quoi on évite les risques de fluage du matériau polymère au niveau de la partie 16 de fixation du vitrage 10 sollicitée par lesdits moyens 70 de fixation, de préférence ici par vissage ou autre moyen de fixation équivalent.

On décrira ci-après, par comparaison avec le premier mode de réalisation, un deuxième mode de réalisation d'un vitrage 10 feuilleté comportant un organe 50 de liaison.

Tel qu'illustré en éclaté sur la figure 10, le vitrage 10 feuilleté est identique à celui décrit précédemment pour le premier mode de réalisation, en référence aux figures 1 à 3.

Selon une caractéristique de l'invention, le premier axe A1 du trou 26 de la feuille 20 de verre extérieure et le deuxième axe A2 du trou 36 de la feuille 30 de verre intérieure sont décalés l'un par rapport à l'autre selon un décalage « d » qui est configuré pour former la première surface S1 de blocage sur la face 24 intérieure de la feuille 20 de verre extérieure et la deuxième surface S2 de blocage sur la face 34 intérieure de la feuille 30 de verre intérieure.

La première surface S1 de blocage et la deuxième surface S2 de blocage sont notamment visibles sur la figure 17 en coupe.

Le décalage « d » est préférentiellement un décalage vertical comme dans le premier mode de réalisation et le diamètre D1 du trou 26 est égal au diamètre D2 du trou 36 de sorte que lesdites surfaces S1 et S2 de blocage présentent une forme de croissant (comme illustrée précédemment sur les figures 1 et 2).

La première surface S1 de blocage et la deuxième surface S2 de blocage sont agencées diamétralement à l'opposé l'une de l'autre selon l'orientation verticale.

Les première et deuxième surfaces S1, S2 de blocage sont agencées symétriquement par rapport à un axe O de référence de l'orifice 18 de fixation du vitrage 10, respectivement en bas pour la première surface S1 et en haut pour la deuxième surface S2 de blocage.

Le diamètre du trou 46 ménagé dans la feuille en matériau polymère formant l'intercalaire 40 présente une valeur qui, ici supérieure à celle des trous 26 et 36, est telle que lesdites surfaces S1 et S2 de blocage ne soient pas recouvertes par du matériau polymère.

La première surface 51 et la deuxième surface 53 portées par l'organe 50 de liaison coopèrent ainsi directement avec lesdites surfaces S1 et S2 de blocage.

En variante (comme dans le premier mode de réalisation), le trou 46 dans l'intercalaire 40 est configuré pour que lesdites surfaces S1 et S2 de blocage soient recouvertes au moins par une couche de matériau polymère, tel que du polyvinylbutyral PVB, dès lors interposé entre les surfaces S1 et S2 de blocage et lesdites surfaces 51, 53 de l'organe 50 de liaison.

Dans ce deuxième mode de réalisation, l'organe 50 de liaison est avantageusement réalisé en deux pièces, respectivement une pièce 50A, dite intérieure, et une autre pièce 50B, dite extérieure. En variante, l'organe 50 de liaison pourrait être réalisé en une seule pièce.

Les pièces 50A et 50B complémentaires sont aptes à être solidarisées l'une avec l'autre par l'intermédiaire de moyens 62 d'accrochage qui, complémentaires, sont portés par chacune desdites pièces.

De préférence, lesdites pièces 50A et 50B formant l'organe 50 de liaison sont fixées ensemble par coopération de formes, préférentiellement par vissage l'une avec l'autre.

Avantageusement, les moyens 62 d'accrochage des pièces 50A et 50B de l'organe 50 de liaison sont configurés pour réaliser un vissage du type « quart de tour ».

En variante, lesdites pièces 50A et 50B formant l'organe 50 de liaison sont fixées ensemble par tout autre moyen approprié, notamment par emboîtement élastique (ou « clipsage »), par un montage à force ou encore par collage.

La pièce 50A intérieure de l'organe 50 comporte une partie 150 centrale et une partie 152 périphérique entourant ladite partie 150 centrale, ladite pièce 50A étant plus particulièrement illustrée par les figures 11 et 12.

Tel qu'illustré sur la figure 11, la partie 150 centrale comporte le trou 56 destiné à être traversé par les moyens 70 de fixation du vitrage 10 feuilleté avec un dispositif d'entraînement. Le trou 56 est centré sur un axe A principal de l'organe 50 de liaison.

De préférence, les moyens 70 de fixation illustrés sur les figures 10, 15 et 16 sont identiques à ceux décrits précédemment.

La partie 150 centrale comporte la face 54 intérieure, ici de forme annulaire et entourant le trou 56.

Tel qu'illustré sur la figure 12, la partie 150 centrale de la pièce 50A comporte une partie des moyens 62 d'accrochage formée par au moins un élément 64 mâle qui s'étend en saillie vers l'extérieur par rapport au reste de la pièce 50A.

Les moyens 62 d'accrochage sont avantageusement configurés pour permettre de solidariser lesdites pièces 50A et 50B par un vissage du type quart de tour.

L'élément 64 mâle comporte à cet effet une ou des formes 65 techniques destinées à coopérer avec des formes 67 techniques complémentaires portées par l'autre pièce 50B extérieure.

La pièce 50B extérieure est plus particulièrement illustrée sur les figures 13 et 14, ladite pièce 50B comportant une partie 250 centrale et une partie 252 périphérique entourant ladite partie 250.

La partie 250 centrale de la pièce 50B extérieure comporte l'autre partie desdits moyens 62 d'accrochage qui comporte un élément 66 femelle formée par une ouverture.

L'ouverture 66 est configurée pour être traversée par l'élément 64 mâle, les pièces 50A et 50B étant rendues solidaires, assemblées l'une avec l'autre de la manière qui suit.

La pièce 50A intérieure est introduite transversalement par le trou 36 ménagé dans la feuille 30 de verre intérieure et la pièce 50B extérieure par le trou 26 ménagé dans la feuille 20 de verre extérieure puis les pièces 50A et 50B sont rapprochées pour engager l'élément 64 mâle à travers l'ouverture 66.

La pièce 50A est ensuite entraînée en rotation, par exemple dans le sens horaire, en réalisant une course correspondant à un quart de tour afin d'engager la coopération de formes des moyens 62 d'accrochage par vissage, c'est-à-dire la coopération entre les formes 65 techniques portées par l'élément 64 de la pièce 50A et les formes 67 techniques portées par la pièce 50B.

Tel qu'illustré sur la figure 14, les formes 67 techniques complémentaires sont agencées sur une face 52 extérieure de la partie 250 centrale de la pièce 50B extérieure, autour de l'ouverture 66 pour le passage de l'élément 64.

De préférence, lesdites formes 65 et 67 techniques sont configurées pour qu'une venue en butée survienne lorsque la course d'un quart de tour a été effectuée.

Tel qu'indiqué précédemment, les moyens 62 d'accrochage par un vissage du type quart de tour ne constituent qu'un exemple de réalisation non limitatif.

Selon une autre caractéristique de ce deuxième mode de réalisation, l'organe 50 de liaison est configuré pour pouvoir se déformer de manière élastique, notamment selon une direction radiale qui est orthogonale à l'axe A principal de l'organe 50.

Tel qu'illustré sur les figures 11 à 14, la pièce 50A intérieure comme la pièce 50B extérieure formant l'organe 50 de liaison comportent respectivement une partie 152 périphérique et une partie 252 périphérique présentant, à l'état libre avant montage, un pourtour circulaire.

Or et comme décrit pour le premier mode de réalisation, l'orifice 18 de fixation présente une forme non-circulaire, en ellipse, en raison du décalage « d » entre les axes A1 et A2 de sorte que l'organe 50 de liaison est configuré pour pouvoir s'ajuster lorsque chacune des pièces 50A et 50B est inséré dans l'orifice 18 de fixation.

Avantageusement, la déformation élastique de l'organe 50 de liaison est obtenue grâce à la conception de chacune desdites partie 152 périphérique et partie 252 périphérique qui sont flexibles selon la direction radiale.

Le fait pour l'organe 50 de liaison d'être ainsi déformable élastiquement selon la direction radiale est indépendant de la réalisation en une ou deux pièces 50A, 50B.

La partie 152 périphérique de la pièce 50A intérieure comporte une couronne 154 discontinue formée par des patins 156 qui sont chacun reliés à la partie 150 centrale par au moins un bras 158 élastique qui est apte à se déformer radialement.

Les patins 156 formant la couronne 154 flexible sont courbes, en forme d'arc de cercle, chaque patin 156 étant séparé des patins 156 adjacents par un espace 160 ménagé de part et d'autre afin de lui permettre de se déformer élastiquement indépendamment des autres patins 156.

De préférence, chaque patin 156 est relié à la partie 150 centrale par un bras 158 présentant un profil curviligne et d'épaisseur réduite afin de conférer la flexibilité à la partie 152 périphérique.

La partie 152 périphérique est ajourée, présentant des évidements 162 s'étendant circonférentiellement entre deux bras 158 successifs et radialement entre la partie 150 centrale et la couronne 154 formée par les patins 156.

De préférence, les patins 156 et les bras 158 associés sont répartis circonférentiellement de manière régulière autour de l'axe A, de même que les évidements 162.

Tel qu'illustré sur les figures 13 et 14, la pièce 50B extérieure de l'organe 50 de liaison comporte une partie 252 périphérique flexible dont la structure est identique à celle de la pièce 50A intérieure qui vient décrite en référence aux figures 11 et 12 de sorte que la structure ne sera pas décrite à nouveau en détail ci-après.

La partie 252 périphérique de la pièce 50B extérieure comporte une couronne 254 comportant des patins 256 dont chacun est relié à la partie 250 centrale par un bras 258, deux patins 256 adjacents étant séparés par un espace 260.

La partie 252 périphérique de la pièce 50B extérieure est également ajourée par des évidements 262 qui sont répartis circonférentiellement de manière régulière autour de l'axe A.

Tel qu'illustré sur la figure 12, la première surface 51 de l'organe 50 de liaison destinée à coopérer avec ladite première surface S1 de blocage est portée par la couronne 154 flexible de la pièce 50A intérieure.

En effet, la première surface 51 est portée par une partie de la couronne 154 flexible qui présente transversalement, sur un secteur angulaire donné, une épaisseur plus importante de manière à s'étendre en saillie en direction de la première surface S1 de blocage.

Avantageusement, l'épaisseur de la partie de la couronne 154 flexible portant la première surface 51 est déterminée en fonction de l'épaisseur de l'intercalaire 40 pour que ladite première surface 51 soit en appui directement contre tout ou partie de la première surface S1 de blocage portée par la face 24 intérieure de la feuille 20 de verre extérieure.

Tel qu'illustré sur la figure 13, la deuxième surface 53 de l'organe 50 de liaison destinée à coopérer avec ladite deuxième surface S2 de blocage est portée par la couronne 254 flexible de la pièce 50B extérieure.

Comme pour la première surface 51, la couronne 254 flexible portant la deuxième surface 53 présente transversalement, sur un secteur angulaire donné, une épaisseur plus importante de manière à s'étendre en saillie en direction de la deuxième surface S2 de blocage.

Avantageusement, ladite deuxième surface 53 est ainsi en appui directement contre tout ou partie de la deuxième surface S2 de blocage portée par la face 32 extérieure de la feuille 30 de verre intérieure.

Par comparaison avec le premier mode de réalisation, la première surface 51 et la deuxième surface 53 ne présente pas une forme en croissant mais une forme de parenthèse couchée, la largeur de la surface 51, 53 étant constante d'une extrémité à l'autre de la partie de la couronne 154, 254 la portant.

Les figures 15 et 16 représentent respectivement vu de l'intérieur puis de l'extérieur l'organe 50 de liaison après l'assemblage des deux pièces 50A et 50B.

Comme on peut le voir sur ces figures 15 et 16, les moyens 62 d'accrochage par vissage sont configurés de manière à positionner angulairement la pièce 50A intérieure et la pièce 50B extérieure en coïncidence l'une avec l'autre.

Avantageusement, les évidements 162 de la pièce 50A intérieure sont alignés transversalement avec les évidements 262 de la pièce 50B extérieure, de même que les bras 158 flexibles sont alignés avec les bras 258 flexibles.

Le montage de l'organe 50 de liaison dans l'orifice 18 de fixation est réalisé simultanément à l'accrochage de la pièce 50A intérieure avec la pièce 50B extérieure qui sont pour cela introduite chacune transversalement dans l'un des trous 36 et 26.

Avantageusement, l'organe 50 de liaison est fixé au vitrage 10 par coopération de formes, d'une part, radialement entre les parties 152, 252 périphériques flexibles et l'orifice 18 et, d'autre part, entre lesdites surfaces 51, 53 de l'organe 50 et les surfaces S1, S2 de blocage créées par le décalage « d » entre les axes A1 et A2 des trous 26 et 36.

Avantageusement, l'organe 50 de liaison formé des deux pièces 50A et 50B est inséré dans l'orifice 18 de fixation avant l'assemblage du vitrage 10 feuilleté.

Avantageusement, l'organe 50 de liaison est ici aussi configuré pour former une entretoise apte notamment à limiter le fluage du matériau polymère.

De préférence et tel qu'illustré sur les figures 15 et 16, les pièces 50A et 50B sont en position d'utilisation (après montage) à fleur par rapport à la face 22 extérieure et la face 34 intérieure du vitrage 10 feuilleté.

Avantageusement, l'organe 50 de liaison selon le premier mode comme le deuxième mode de réalisation est compris dans l'épaisseur E du vitrage 10 feuilleté grâce à quoi une fixation présentant un encombrement réduit est susceptible d'être obtenue.

Par comparaison avec un insert selon certaine réalisation de l'art antérieur, l'organe 50 de liaison ne s'étend pas en saillie hors de l'orifice 18 et laisse libre la face 22 extérieure et la face 34 intérieure du vitrage 10 feuilleté.

## Revendications

1. Vitrage (10) feuilleté pour un véhicule automobile, notamment un vitrage latéral destiné à être monté coulissant dans une portière du véhicule, comportant au moins une feuille (20) de verre extérieure et une feuille (30) de verre intérieure assemblées par un intercalaire (40) qui comporte au moins une feuille en matériau polymère, ledit vitrage (10) comportant au moins une partie (16) de fixation du vitrage (10) traversée par au moins un orifice (18) de fixation qui est formé par au moins un trou (26) présentant un premier axe (A1) qui est ménagé dans la feuille (20) de verre extérieure, un trou (46) ménagé dans l'intercalaire (40) et un trou (36) présentant un deuxième axe (A2) qui est ménagé dans la feuille (30) de verre intérieure, dans lequel au moins un organe (50) de liaison est fixé au vitrage (10) en traversant ledit orifice (18) de fixation, ledit organe (50) de liaison muni d'un trou (56) étant destiné à recevoir des moyens (70) de fixation dudit vitrage (10) avec un dispositif d'entraînement, **caractérisé en ce que** le premier axe (A1) du trou (26) de la feuille (20) de verre extérieure et le deuxième axe (A2) du trou (36) de la feuille (30) de verre intérieure sont décalés l'un par rapport à l'autre selon un décalage (d) qui est configuré pour former une première surface (S1) de blocage sur une face (24) intérieure de la feuille (20) de verre extérieure et une deuxième surface (S2) de blocage sur une face (32) extérieure de la feuille (30) de verre intérieure, **et en ce que** ledit organe (50) de liaison comporte une première surface (51) configurée pour coopérer avec ladite première surface (S1) de blocage de la feuille (20) de verre extérieure et une deuxième surface (53) configurée pour coopérer avec ladite deuxième surface (S2) de blocage de la feuille (30) de verre intérieure.

2. Vitrage feuilleté selon la revendication 1, **caractérisé en ce que** la première surface (S1) de blocage et la deuxième surface (S2) de blocage présentent respectivement une forme de croissant.

3. Vitrage feuilleté selon l'une des revendications 1 ou 2, **caractérisé en ce que** l'axe (A1) du trou (26) et l'axe (A2) du trou (36) sont décalés verticalement l'un par rapport à l'autre.

4. Vitrage feuilleté selon l'une quelconque des revendications 1 à 3, **caractérisé en ce que** la première surface (S1) de blocage et la deuxième surface (S2) de blocage sont agencées diamétralement à l'opposé l'une de l'autre, lesdites première et deuxième surfaces (S1, S2) de blocage étant agencées de manière symétrique par rapport à un axe (O) de l'orifice (18) de fixation du vitrage (10).

5. Vitrage feuilleté selon l'une quelconque des revendications 1 à 4, **caractérisé en ce que** l'organe (50) de liaison est fixé au vitrage (10) par coopération de formes entre lesdites surfaces (51, 53) de l'organe (50) et les surfaces (S1, S2) de blocage.

6. Vitrage feuilleté selon l'une quelconque des revendications 1 à 5, **caractérisé en ce que** l'organe (50) de liaison est fixé au vitrage (10) par collage par l'intermédiaire du matériau polymère de ladite au moins une feuille de l'intercalaire (40).

7. Vitrage feuilleté selon l'une quelconque des revendications précédentes, **caractérisé en ce que** la première surface (51) et la deuxième surface (53) de l'organe (50) de liaison sont agencées diamétralement à l'opposé l'une par rapport à l'autre, lesdites surfaces (51, 53) présentant une symétrie par rapport à un axe (A) de l'organe (50) de liaison.

8. Vitrage feuilleté selon l'une quelconque des revendications précédentes, **caractérisé en ce que** l'organe (50) de liaison est réalisé dans un matériau thermoplastique, par exemple en polyamide (PA) tel que du PA 6-6, en polyoxyméthylène (POM), en polybutylène téréphtalate (PBT).

9. Vitrage feuilleté selon l'une quelconque des revendications précédentes, **caractérisé en ce que** l'organe (50) de liaison est configuré pour former une entretoise par rapport au vitrage (10) feuilleté, notamment apte à limiter lors de l'assemblage du vitrage (10) le fluage du matériau polymère de ladite au moins une feuille de l'intercalaire (40).

10. Vitrage feuilleté selon l'une quelconque des revendications précédentes, **caractérisé en ce que** l'organe (50) de liaison des moyens de fixation est réalisé en une seule pièce, monobloc.

11. Vitrage feuilleté selon l'une quelconque des revendications précédentes, **caractérisé en ce que** l'organe (50) de liaison présente un pourtour en forme d'ellipse.

12. Vitrage feuilleté selon l'une quelconque des revendications précédentes, caractérisé ce que l'organe (50) de liaison comporte un premier chanfrein (57) associé à la première surface (51) et un deuxième chanfrein (59) associé à la deuxième surface (53) qui sont destinés à faciliter le montage dudit organe (50) de liaison dans l'orifice (18) de fixation.

13. Vitrage feuilleté selon l'une quelconque des revendications 1 à 9, **caractérisé en ce que** l'organe (50) de liaison est réalisé en deux pièces (50A, 50B) aptes à être solidarisées l'une avec l'autre par l'intermédiaire de moyens (62) d'accrochage complémentaires portés par chacune desdites pièces (50A, 50B).

14. Vitrage feuilleté selon la revendication 13, **caractérisé en ce que** lesdites pièces (50A, 50B) formant l'organe (50) de liaison sont fixées ensemble par coopération de formes, de préférence par vissage, en variante par emboîtement élastique (ou clipsage) ou par un montage à force ou par collage.

15. Vitrage feuilleté selon la revendication 13 ou 14, **caractérisé en ce que** l'organe (50) de liaison est configuré pour se déformer radialement de manière élastique afin de pouvoir s'ajuster lorsque ledit organe (50) de liaison est inséré dans l'orifice (18) de fixation.

## Patentansprüche

1. Verbundverglasung (10) für ein Kraftfahrzeug, insbesondere eine Seitenverglasung, die dazu bestimmt ist, in einer Fahrzeugtür verschiebbar montiert zu werden, die mindestens eine äußere Glasscheibe (20) und eine innere Glasscheibe (30) aufweist, die durch eine Zwischenlage (40) zusammengebaut sind, die mindestens eine Scheibe aus Polymermaterial aufweist, wobei die Verglasung (10) mindestens einen Teil (16) zum Befestigen der Verglasung (10) aufweist, der durch mindestens eine Befestigungsöffnung (18) durchquert wird, die durch mindestens ein Loch (26), das eine ersten Achse (A1) vorweist, das in der äußeren Glasscheibe (20) angebracht ist, ein Loch (46), das in der Zwischenlage (40) angebracht ist, und ein Loch (36) ausgebildet ist, das eine zweite Achse (A2) vorweist, das in der inneren Glasscheibe (30) angebracht ist, wobei mindestens ein Verbindungsorgan (50) an der Verglasung (10) befestigt ist, indem es die Befestigungsöffnung (18) durchquert, wobei das Verbindungsorgan (50), das mit einem Loch (56) versehen ist, dazu bestimmt ist, Mittel (70) zum Befestigen der Verglasung (10) mit einer Antriebsvorrichtung aufzunehmen,
**dadurch gekennzeichnet, dass** die erste Achse (A1) des Lochs (26) der äußeren Glasscheibe (20) und die zweite Achse (A2) des Lochs (36) der inneren Glasscheibe (30) um einen Versatz (d) relativ zueinander versetzt sind, der zum Ausbilden einer ersten Sperroberfläche (S1) auf einer Innenfläche (24) der äußeren Glasscheibe (20) und einer zweiten Sperroberfläche (S2) auf einer Außenfläche (32) der inneren Glasscheibe (30) konfiguriert ist, **und dass** das Verbindungsorgan (50) eine erste Oberfläche (51), die zum Zusammenwirken mit der ersten Sperroberfläche (S1) der äußeren Glasscheibe (20) konfiguriert ist, und eine zweite Oberfläche (53) aufweist, die zum Zusammenwirken mit der zweiten Sperroberfläche (S2) der inneren Glasscheibe (30) konfiguriert ist.

2. Verbundverglasung nach Anspruch 1, **dadurch gekennzeichnet, dass** die erste Sperroberfläche (S1) und die zweite Sperroberfläche (S2) jeweils eine Sichelform aufweisen.

3. Verbundverglasung nach einem der Ansprüche 1 oder 2,
**dadurch gekennzeichnet, dass** die Achse (A1) des Lochs (26) und die Achse (A2) des Lochs (36) relativ zueinander vertikal versetzt sind.

4. Verbundverglasung nach einem der Ansprüche 1 bis 3,
**dadurch gekennzeichnet, dass** die erste Sperroberfläche (S1) und die zweite Sperroberfläche (S2) diametral gegenüberliegend zueinander angeordnet sind, wobei die erste und die zweite Sperroberfläche (S1, S2) relativ zu einer Achse (O) der Öffnung (18) zum Befestigen der Verglasung (10) auf symmetrische Weise angeordnet sind.

5. Verbundverglasung nach einem der Ansprüche 1 bis 4,
**dadurch gekennzeichnet, dass** das Verbindungsorgan (50) an der Verglasung (10) durch Formschluss zwischen den Oberflächen (51, 53) des Organs (50) und den Sperroberflächen (S1, S2) befestigt ist.

6. Verbundverglasung nach einem der Ansprüche 1 bis 5,
**dadurch gekennzeichnet, dass** das Verbindungsorgan (50) an der Verglasung (10) durch Verkleben über das Polymermaterial der mindestens einen Scheibe der Zwischenlage (40) befestigt ist.

7. Verbundverglasung nach einem der vorstehenden Ansprüche,
**dadurch gekennzeichnet, dass** die erste Oberfläche (51) und die zweite Oberfläche (53) des Verbindungsorgans (50) relativ zueinander diametral gegenüberliegend angeordnet sind, wobei die Oberflächen (51, 53) eine Symmetrie relativ zu einer Achse (A) des Verbindungsorgans (50) vorweisen.

8. Verbundverglasung nach einem der vorstehenden Ansprüche,
**dadurch gekennzeichnet, dass** das Verbindungsorgan (50) aus einem thermoplastischen Material hergestellt ist, beispielsweise aus Polyamid (PA) wie PA 6-6, aus Polyoxymethylen (POM), aus Polybutylenterephthalat (PBT).

9. Verbundverglasung nach einem der vorstehenden Ansprüche,
**dadurch gekennzeichnet, dass** das Verbindungsorgan (50) zum Ausbilden eines Abstandshalters relativ zu der Verbundverglasung (10) konfiguriert ist, der insbesondere dazu geeignet ist, bei dem Zusammenbau der Verglasung (10) das Kriechen des Polymermaterials der mindestens einen Scheibe der Zwischenlage (40) zu begrenzen.

10. Verbundverglasung nach einem der vorstehenden Ansprüche,
**dadurch gekennzeichnet, dass** das Organ (50) zum Verbinden der Befestigungsmittel aus einem einzigen Stück, einem Monoblock, hergestellt ist.

11. Verbundverglasung nach einem der vorstehenden Ansprüche,
**dadurch gekennzeichnet, dass** das Verbindungsorgan (50) einen ellipsenförmigen Umfang vorweist.

12. Verbundverglasung nach einem der vorstehenden Ansprüche,
**dadurch gekennzeichnet, dass** das Verbindungsorgan (50) eine erste Abschrägung (57), die der ersten Oberfläche (51) zugeordnet ist, und eine zweite Abschrägung (59) aufweist, die der zweiten Oberfläche (53) zugeordnet ist, die dazu bestimmt sind, das Montieren des Verbindungsorgans (50) in der Befestigungsöffnung (18) zu erleichtern.

13. Verbundverglasung nach einem der Ansprüche 1 bis 9,
**dadurch gekennzeichnet, dass** das Verbindungsorgan (50) aus zwei Stücken (50A, 50B) hergestellt ist, die geeignet sind, über komplementäre Verhakungsmittel (62) fest miteinander verbunden zu werden, die durch jedes der Stücke (50A, 50B) getragen werden.

14. Verbundverglasung nach Anspruch 13, **dadurch gekennzeichnet, dass** die Stücke (50A, 50B), die das Verbindungsorgan (50) ausbilden, durch Formschluss gemeinsam befestigt sind, vorzugsweise durch Verschrauben, alternativ durch elastisches Einpassen (oder Einrasten) oder durch kraftschlüssiges Montieren oder durch Verkleben.

15. Verbundverglasung nach Anspruch 13 oder 14,
**dadurch gekennzeichnet, dass** das Verbindungsorgan (50) zum sich radial Verformen auf elastische Weise konfiguriert ist, um sich anpassen zu können, wenn das Verbindungsorgan (50) in die Befestigungsöffnung (18) eingeführt wird.

## Claims

1. A laminated glazing (10) for a motor vehicle, particularly a side glazing intended to be slidably mounted in a door of the vehicle, comprising at least one outer glass sheet (20) and one inner glass sheet (30) assembled by an interlayer (40) which comprises at least one sheet of polymer material, said glazing (10) comprising at least one attachment part (16) for attaching the glazing (10) through which at least one attachment opening (18) passes which is formed by at least a hole (26) having a first axis (A1) which is provided in the outer glass sheet (20), a hole (46) provided in the interlayer (40) and a hole (36) having a second axis (A2) which is provided in the inner glass sheet (30), wherein at least one connecting member (50) is attached to the glazing (10) by passing through said attachment opening (18), said connecting member (50) provided with a hole (56) being intended to receive attachment means (70) for attaching said glazing (10) with a drive device, **characterized in that** the first axis (A1) of the hole (26) of the outer glass sheet (20) and the second axis (A2) of the hole (36) of the inner glass sheet (30) are mismatched with respect to one another according to a mismatch (d) that is configured to form a first blocking surface (S1) on an inner face (24) of the outer glass sheet (20) and a second blocking surface (S2) on an outer face (32) of the inner glass sheet (30), **and in that** said connecting member (50) comprises a first surface (51) configured to engage with said first blocking surface (S1) of the outer glass sheet (20) and a second surface (53) configured to engage with said second blocking surface (S2) of the inner glass sheet (30).

2. The laminated glazing according to claim 1, **characterized in that** the first blocking surface (S1) and the second blocking surface (S2) are respectively crescent-shaped.

3. The laminated glazing according to any one of claims 1 or 2, **characterized in that** the axis (A1) of the hole (26) and the axis (A2) of the hole (36) are mismatched vertically with respect to one another.

4. The laminated glazing according to any one of claims 1 to 3, **characterized in that** the first blocking surface (S1) and the second blocking surface (S2) are arranged diametrically opposite one another, said first and second blocking surfaces (S1, S2) being arranged symmetrically with respect to an axis (O) of the attachment opening (18) of the glazing (10).

5. The laminated glazing according to any one of claims 1 to 4, **characterized in that** the connecting member (50) is attached to the glazing (10) by interlocking between said surfaces (51, 53) of the member (50) and the blocking surfaces (S1, S2).

6. The laminated glazing according to any one of claims 1 to 5, **characterized in that** the connecting member (50) is attached to the glazing (10) by bonding via the polymer material of said at least one sheet of the interlayer (40).

7. The laminated glazing according to any one of the preceding claims, **characterized in that** the first surface (51) and the second surface (53) of the connecting member (50) are arranged diametrically opposite one another, said surfaces (51, 53) being symmetrical with respect to an axis (A) of the connecting member (50).

8. The laminated glazing according to any one of the preceding claims, **characterized in that** the connecting member (50) is made of a thermoplastic material, for example polyamide (PA) such as PA 6-6, polyoxymethylene (POM), polybutylene terephthalate (PBT).

9. The laminated glazing according to any one of the preceding claims, **characterized in that** the connecting member (50) is configured to form a spacer with respect to the laminated glazing (10) particularly able to limit when the glazing (10) is assembled the creep of the polymer material of said at least one sheet of the interlayer (40).

10. The laminated glazing according to any one of the preceding claims, **characterized in that** the connecting member (50) of the attachment means is produced as a single, integral piece.

11. The laminated glazing according to any one of the preceding claims, **characterized in that** the connecting member (50) has an elliptic perimeter.

12. The laminated glazing according to any one of the preceding claims, **characterized in that** the connecting member (50) comprises a first chamfer (57) associated with the first surface (51) and a second chamfer (59) associated with the second surface (53) which are intended to facilitate the mounting of said connecting member (50) in the attachment opening (18).

13. The laminated glazing according to any one of claims 1 to 9, **characterized in that** the connecting member (50) is produced as two pieces (50A, 50B) able to be rigidly connected to one another via complementary fastening means (62) carried by each of said pieces (50A, 50B).

14. The laminated glazing according to claim 13, **characterized in that** said pieces (50A, 50B) forming the connecting member (50) are attached together by interlocking, preferably by screwing, alternatively by elastic interlocking (or snap-fitting) or by interference fitting or by bonding.

15. The laminated glazing according to claim 13 or 14, **characterized in that** the connecting member (50) is configured to deform radially in an elastic manner in order to be able to be adjusted when said connecting member (50) is inserted into the attachment opening (18).
